# EUROPÄISCHE PATENTSCHRIFT

(11) **EP 2 665 366 B1**
(45) Veröffentlichungstag und Bekanntmachung des Hinweises auf die Patenterteilung: **08.10.2014**
(21) Anmeldenummer: 11808827.7
(22) Anmeldetag: 13.12.2011
(51) Int. Cl.: A23F 3/16, A23F 3/32, A23L 2/395, A23L 2/60, A23L 1/236

(54) **KALORIENREDUIZIERTE ZUBEREITUNGEN FÜR DIE HERSTELLUNG VON INSTANT-GETRÄNKEN UND DEREN HERSTELLUNG**
REDUCED-CALORIE PREPARATIONS FOR PRODUCING INSTANT BEVERAGES AND THE PRODUCTION THEREOF
FORMULATION À TENEUR RÉDUITE EN CALORIES POUR LA PRÉPARATION DE BOISSONS INSTANTANÉES, ET PRODUCTION DES CES COMPOSITIONS

(30) Priorität: 18.01.2011 DE 102011008805; 23.02.2011 DE 102011012204
(43) Veröffentlichungstag der Anmeldung: 27.11.2013
(73) Patentinhaber: Krüger GmbH & Co. KG, 51469 Bergisch-Gladbach (DE)
(72) Erfinder: KRÜGER, Willibert, 51467 Bergisch Gladbach (DE)
(74) Vertreter: Strehlke, Ingo Kurt
(86) Internationale Anmeldenummer: PCT/EP2011/006261
(87) Internationale Veröffentlichungsnummer: WO 2012/097842

(56) Entgegenhaltungen:
- EP-A2- 0 230 513
- WO-A1-2006/007993
- WO-A1-2006/108592
- WO-A1-2009/135575
- WO-A2-2006/048191
- DE-A1- 2 809 536
- DE-A1-102008 050 591
- KR-A- 20010 070 914
- DATABASE GNPD [Online] Mintel; Anonymous: "Instant Earl Grey Milk Tea", XP002671391, gefunden im www.gnpd.com Database accession no. 1429861
- DATABASE GNDP [Online] MINTEL; Februar 2002 (2002-02), "Powdered Malt Drink", XP002670578, Database accession no. 138490
- SHITTU ET AL: "Factors affecting instant properties of powdered cocoa beverages", FOOD CHEMISTRY, Bd. 100, Nr. 1, 1. Januar 2007 (2007-01-01), Seiten 91-98, XP005517172, ELSEVIER LTD, NL ISSN: 0308-8146, DOI: 10.1016/J.FOODCHEM.2005.09.013

## Beschreibung

Die vorliegende Erfindung betrifft eine zumindest im Wesentlichen saccharosefreie Instant-Getränkezusammensetzung auf Basis eines speziellen Granulat- und/oder Agglomeratbildners einerseits und aroma- bzw. geschmacksbildenden Komponenten andererseits, insbesondere zur Herstellung eines vorzugsweise nichtkariogenen und/oder kalorienreduzierten Instant-Getränks durch Aufbereiten mit einer trinkbaren Flüssigkeit, sowie ein Verfahren zu ihrer Herstellung. Weiterhin betrifft die vorliegende Erfindung die Verwendung einer solchen Instant-Getränkezusammensetzung zur Herstellung eines vorzugsweise nichtkariogenen und/oder kalorienreduzierten Instant-Getränks, insbesondere Instant-Teegetränks, durch Aufbereiten mit einer Trinkflüssigkeit, insbesondere Wasser.

Der Begriff der Instant-Produkte stellt eine Bezeichnung für meist teilchen- bzw. pulverförmige, in Wasser lösliche bzw. dispergierbare Produkte überwiegend auf dem Gebiet der Nahrungs- und Geschmacksmittel, wie Kaffee-, Tee-, Kakao-, Milchprodukte etc., dar. Die Herstellung von Instant-Produkten erfolgt im Allgemeinen durch Extraktion der Nahrungs- und Geschmacksmittel bzw. deren Inhaltsstoffen, gefolgt von einer anschließenden Trocknung, insbesondere Gefrier- oder Sprühtrocknung. Für weitere Einzelheiten kann verwiesen werden auf Römpp Chemielexikon, Band 3, 10. Auflage, Georg-Thieme-Verlag, Stuttgart/New York, 1997, Seite 1936, Stichwort: "Instant-Produkte", sowie die dort referierte Literatur, deren jeweiliger Inhalt hiermit durch Bezugnahme eingeschlossen ist. Auf diese Weise können insbesondere auch Instant-Teegetränke hergestellt werden.

In Bezug auf Instant-Getränkezusammensetzungen bzw. die daraus hergestellten Instant-Getränke ist dabei oftmals ein gewisses Maß an Süße sowie ein natürlicher und aromatischer Geschmack erwünscht, was durch eine Kombination von süß schmeckenden Komponenten und Aromabestandteilen gewährleistet werden soll. In diesem Zusammenhang wird im Stand der Technik als süßungsbildende Komponente oftmals Kristallzucker bzw. Saccharose eingesetzt, wobei die Instant-Getränkezusammensetzungen des Standes der Technik oftmals einen sehr hohen Gehalt an Kristallzucker bzw. Saccharose aufweisen, um auf diese Weise dem aufbereiteten Instant-Getränk die gewünschte Süße zu verleihen. Ein hoher Kristallzuckergehalt ist aber zum einen aus zahnmedizinischen Gründen unerwünscht, da er die Bildung von Karies fördert. Insbesondere die Zähne von Kindern sind noch sehr kariesanfällig. Zum anderen ist ein hoher Kristallzuckergehalt ernähungsphysiologisch nachteilig, da der hohe Brennwert die Gewichtszunahme fördert und zudem den Insulinspiegel ansteigen lässt. Derartige Instant-Getränkezusammensetzungen des Standes der Technik sind somit insbesondere auch für Diabetiker weniger geeignet bzw. nicht vorteilhaft.

Vor diesem Hintergrund ist man im Stand der Technik dazu übergegangen, einen Teil des Kristallzuckers bzw. der Saccharose durch andere süßungsbildende Substanzen zu ersetzen.

So besteht ein Ansatz im Stand der Technik darin, den aus ernährungsphysiologischer und zahnmedizinischer Sicht nachteiligen Zucker in Form von Saccharose bzw. Kristallzucker durch so genannte Süßstoffe teilweise zu ersetzen. Aufgrund der hohen Süßkraft der im Stand der Technik eingesetzten Süßstoffe kann es aber schnell zu einer Übersüßung des aus der Zusammensetzung hergestellten Trinkproduktes kommen. Die diesbezüglich im Stand der Technik bekannten Instant-Getränkezusammensetzungen weisen zudem nicht immer eine natürlich schmeckende Süße auf, und die Dosierbarkeit ist mitunter nicht optimal, was maßgeblich auch mit der hohen Süßkraft der verwendeten Süßstoffe zusammenhängt.

Weiterhin kann der übermäßige Einsatz von Süßstoffen ernährungsphysiologisch insofern bedenklich sein, als zahlreiche Süßstoffe die Insulinausschüttung fördern, was insbesondere in einem gesteigerten Hungergefühl resultieren kann. Aufgrund der ernährungsphysiologischen Nachteile von Süßstoffen, insbesondere ihrer teilweise und insbesondere bei Verzehr in großen Mengen auftretenden abführenden Wirkung, sollten diese nicht oder allenfalls nur in geringen Mengen insbesondere in Bezug auf Kindernahrung eingesetzt werden.

Zudem ist es im Stand der Technik bislang nicht immer in zufriedenstellendem Maße gelungen, eine kalorienreduzierte Instant-Getränkezusammensetzung insbesondere auf Basis eines stabilen Granulats bzw. Agglomerats bereitzustellen, welches auch bei längeren Lagerzeiten nicht verklumpt und welches zudem gut in der Trinkflüssigkeit löslich ist und dabei die gute Dosierbarkeit einer nichtkalorienreduzierten Instant-Getränkezusammensetzung aufweist.

In diesem Lichte sind im Stand der Technik bislang zahlreiche Versuche unternommen worden, Kristallzucker bzw. Saccharose auch durch andere, von Süßstoffen verschiedene Süßungsmittel zu ersetzen, insbesondere auch im Hinblick auf die Aufrechterhaltung des Süßgeschmacks und die Bereitstellung der Zusammensetzung in Form von mitunter verbesserten Granulaten bzw. Agglomeraten. Insbesondere die Verarbeitbarkeit solcher Zusammensetzungen ist jedoch problematisch, und die resultierenden Granulate bzw. Agglomerate sind häufig instabil und weisen somit nur eine begrenzte Haltbarkeit bzw. Lagerungsfähigkeit auf. Auch die organoleptischen Eigenschaften derartiger Zusammensetzungen sind nicht immer optimal, insbesondere da der Süßungsgrad oftmals nicht ausreicht bzw. unerwünschte Geschmacksbeeinträchtigungen, insbesondere in Form eines bitteren Beigeschmacks, auftreten können.

Ein weiterer Ansatz, die negativen Eigenschaften von Kristallzucker bzw. Saccharose zumindest teilweise zu kompensieren, besteht darin, dass bislang versucht wurde, den Kristallzucker bzw. die Saccharose partiell und somit nur teilweise durch Isomaltulose auszutauschen. Diesbezüglich konnte grundsätzlich gezeigt werden, dass sich Isomaltulose insbesondere hinsichtlich des Geschmackes der resultierenden Instant-Getränkezusammensetzungen bzw. der hieraus hergestellten Instant-Getränke als Komponente zum teilweisen Austausch von Saccharose bzw. Kristallzucker eignet, wobei die resultierenden Zusammensetzungen jedoch mitunter nicht immer optimale Eigenschaften hinsichtlich der insbesondere physikalischen bzw. mechanischen Eigenschaften der resultierenden Granulate bzw. Agglomerate aufweisen. So weisen die auf dieser Basis hergestellten Granulate bzw. Agglomerate nicht immer die gewünschten Stabilitätseigenschaften auf, was zu einer übermäßigen Staubbildung bzw. zu einem übermäßigen Zerfall der Granulate bzw. Agglomerate führt. Zudem ist das Löslichkeitsverhalten derartiger Produkte mitunter nicht zufriedenstellend, und auch die Aufnahme bzw. Inkorporation von aroma- bzw. geschmacksbildenden Komponenten ist mitunter verbesserungsfähig.

Darüber hinaus weist eine Vielzahl der handelsüblichen Instant-Getränkemischungen zudem den Nachteil auf, dass sie oftmals als feinteiliges Pulver oder allenfalls als sehr kleinkörniges Granulat bzw. Agglomerat vorliegen, wobei diese Produkte - auch bedingt durch die mechanische Instabilität der zugrundeliegenden Partikel - oft zu einer hohen Staubentwicklung neigen, was sowohl bei ihrer Herstellung als auch bei ihrer Verpackung und schließlich auch bei der Handhabung durch den Endverbraucher nachteilig ist. Zudem weisen solche Instant-Produkte eine schlechte Dosierbarkeit auf. Weiterhin sind die pulverbasierten Instant-Produkte des Standes der Technik nicht immer in der Trinkflüssigkeit, insbesondere Wasser, optimal löslich, da sie beim Einbringen in die Flüssigkeit mitunter zum Verklumpen neigen. Zudem ist bei solchen Instant-Getränkezusammensetzungen des Standes der Technik insbesondere auch bei längerer Lagerung oftmals eine Tendenz zur Klumpenbildung zu beobachten.

Die KR 2001 0070914 A1 betrifft eine pulverförmige Zusammensetzung auf Basis von Erythritol, gegebenenfalls in Kombination mit einem weiteren Zuckeraustauschstoff, und mindestens einem Vitamin aus der Gruppe von Vitamin A, Vitamin B, Vitamin C, Vitamin D, Vitamin E und Vitamin P. Darüber hinaus kann die Zusammensetzung funktionelle Inhaltsstoffe aus der Gruppe von Polyphenolen, Chitosan, Milchsäurebakterien, Bifidobakterien, Tee-Extrakten, Chlorophyll und Hefeextrakt enthalten.

Weiterhin existiert im Stand der Technik ein Instant-Tee mit der Geschmacksrichtung Earl Grey / Milch, welcher als Inhaltsstoffe unter anderem Erythritol, Lactose, Isomaltulose und Schwarzteeextrakt enthält.

Die WO 2006/007993 A1 betrifft darüber hinaus kakaohaltige Pulver mit Palatinose (Isomaltulose), insbesondere zur Herstellung von Instant-Fertiggetränken, welche 9 bis 60 Gew.-% einer Kakaokomponente, 1 bis 40 Gew.-% eines Zusatzstoffes sowie 20 bis 90 Gew.-% Palatinose bzw. Isomaltulose enthalten.

Gemäß der WO 2009/135575 A1 werden eine Instant-Getränkezusammensetzung, welche mindestens einen Granulatbildner und mindestens einen Geschmacksbildner aufweist, sowie ein Verfahren zu deren Herstellung beschrieben.

Die WO 2006/108592 A1 betrifft geformte Instant-Stücke, welche zur Herstellung eines Instant-Nahrungsmittels oder Instant-Arzneimittels, insbesondere eines Instant-Getränks, geeignet sind. Die Instant-Stücke können unter anderem Ovomaltine enthalten. Darüber hinaus betrifft die Druckschrift ein Verfahren zur Herstellung der geformten Instant-Stücke aus einer Instant-Zusammensetzung.

Das zuvor bereits erwähnte und aus dem Stand bekannte Instant-Getränkeprodukt "Ovomaltine" enthält als Hauptbestandteil Malzextrakt und darüber hinaus Milchpulver sowie fettreduziertes Kakaopulver.

Die DE 10 2008 050 591 A1 betrifft zudem ein Getränk zur Förderung der Zahngesundheit, insbesondere von Kindern, wobei das Getränk zuckerfreien Tee aufweist, besonders bevorzugt Rooibos-Tee, sowie mindestens einen das Wachstum von Karieserregern hemmenden Zuckeraustauschstoff, insbesondere Xylit.

Weiterhin betrifft die WO 2006/048191 A2 Trockenaromaformulierungen, welche einen geträgerten Extrakt, insbesondere auf Basis von Trehalose bzw. Isomaltulose, enthalten, sowie ein Verfahren zu deren Herstellung und deren Verwendung.

Die wissenschaftliche Publikation gemäß *Shittu* & *Lawal: "Factors affecting instant properties of powdered cocoa beverages"* beschreibt Instant-Getränkezusammensetzungen, welche als Süßungsmittel in erster Linie Saccharose enthalten. Dabei steht insbesondere im Vordergrund, inwieweit Löslichkeit, Benetzbarkeit und Dispergierverhalten vom Zucker- bzw. Fettgehalt beeinflusst werden.

Die EP 0 230 513 A2 betrifft Instant-Getränke, Instant-Tees und Instant-Teegetränke in Pulver-, Granulat- oder Pastenform, welche Kakaopulver oder andere Geschmacksbildner, insbesondere auf Basis von Fruchtextrakten, und einen Träger auf Basis eines wasserlöslichen Proteins aus Weizen, Mais oder Soja enthalten.

Schließlich betrifft die DE 28 09 536 A1 Kakaogetränkepulver auf Basis von Zuckern oder Zuckeraustauschstoffen, Kakaopulver und gegebenenfalls weiteren üblichen Zusatzstoffen, wobei die Zucker- bzw. Zuckeraustauschstoffe in sprühgetrockneter Form vorliegen.

Die Aufgabe der vorliegenden Erfindung besteht somit darin, eine Instant-Getränkezusammensetzung bereitzustellen, welche sich zur Herstellung eines vorzugsweise nichtkariogenen und/oder kalorienreduzierten Instant-Getränks durch Aufbereiten mit einer Trinkflüssigkeit eignet und welche die zuvor geschilderten Nachteile des Standes der Technik zumindest im Wesentlichen vermeidet oder aber zumindest verringert bzw. abschwächt. Dabei soll die Instant-Getränkezusammensetzung in Form eines Granulats und/oder Agglomerats mit verbesserten Eigenschaften, insbesondere im Hinblick auf die Stabilität und Dosierbarkeit, vorliegen.

Insbesondere besteht die Aufgabe der vorliegenden Erfindung darin, eine Instant-Getränkezusammensetzung bereitzustellen, welche gegenüber dem Stand der Technik auch im Hinblick auf zahnmedizinische Aspekte verbessert ist und zudem einen reduzierten Brennwert aufweist bzw. kalorienreduziert ist, wobei die Instant-Getränkezusammensetzung bzw. die daraus hergestellten Instant-Getränke eine angenehme bzw. natürlich schmeckende Süße sowie ein angenehmes Aroma bzw. einen angenehmen Geschmack aufweisen sollen.

Insbesondere sollte die Instant-Getränkezusammensetzung ernährungsphysiologische Eigenschaften aufweisen, welche einen unbedenklichen Einsatz auch als Bestandteil einer kindgerechten Ernährung erlauben. Zudem sollen auch die Dosierbarkeit und das Verklumpungsverhalten sowohl beim Einbringen der Instant-Getränkezusammensetzung in eine Trinkflüssigkeit als auch bei ihrer Lagerung verbessert werden.

Die Anmelderin hat nunmehr in völlig überraschender Weise gefunden, dass auch auf Basis von Isomaltulose als granulat- und/oder agglomeratbildende Komponente stabile und hinsichtlich ihres Löslichkeitsverhaltens verbesserte Granulate und/oder Agglomerate hergestellt werden können, und dies auch wenn diese - wie erfindungsgemäß vorgesehen - zumindest im Wesentlichen frei von Saccharose sind, wobei die erfindungsgemäße Zusammensetzung auf Basis eines speziellen Granulats und/oder Agglomerats zudem eine optimale Süße und insgesamt positive organoleptische Eigenschaften aufweist. Dies ist im Rahmen der vorliegenden Erfindung - wie nachfolgend noch ausführlich angeführt - durch die gezielte Kombination von Isomaltulose einerseits mit mindestens einem Zuckeraustauschstoff bzw. einem von Saccharose verschiedenen Zucker andererseits als weitere granulat- und/oder agglomeratbildende Komponente gelungen.

Zur Lösung der zuvor geschilderten Aufgabe schlägt die vorliegende Erfindung somit eine Zusammensetzung (d. h. Instant-Getränkezusammensetzung) nach Anspruch 1 vor; weitere vorteilhafte Ausgestaltungen sind Gegenstand der diesbezüglichen Unteransprüche.

Weiterer Gegenstand der vorliegenden Erfindung ist ein Verfahren zur Herstellung der erfindungsgemäßen Instant-Getränkezusammensetzung nach Anspruch 13; weitere Ausgestaltungen sind Gegenstand des diesbezüglichen Unteranspruchs.

Weiterer Gegenstand der vorliegenden Erfindung ist die nach dem erfindungsgemäßen Verfahren erhältliche Instant-Getränkezusammensetzung nach Anspruch 14.

Schließlich ist - gemäß Anspruch 15 - weiterer Gegenstand der vorliegenden Erfindung die erfindungsgemäße Verwendung der Zusammensetzung nach der vorliegenden Erfindung.

Es versteht sich von selbst, dass besondere Ausgestaltungen und Ausführungsformen, welche nur im Zusammenhang mit einem Erfindungsaspekt beschrieben sind, auch in Bezug auf die anderen Erfindungsaspekte entsprechend gelten, ohne dass dies ausdrücklich beschrieben ist.

Bei allen nachstehend genannten relativen bzw. prozentualen gewichtsbezogenen Mengenangaben ist zu beachten, dass diese im Rahmen der erfindungsgemäßen Zusammensetzung vom Fachmann derart auszuwählen sind, dass sie sich in der Summe - gegebenenfalls unter Einbeziehung optionaler weiterer Komponenten bzw. Inhaltsstoffe bzw. Zusatzstoffe bzw. Bestandteile, insbesondere wie nachfolgend definiert - stets zu 100 % bzw. 100 Gew.-% ergänzen. Dies versteht sich für den Fachmann aber von selbst. Im Übrigen gilt, dass der Fachmann anwendungsbezogen oder einzelfallbedingt von den nachfolgend aufgeführten Mengenangaben abweichen kann, ohne dass er den Rahmen der vorliegenden Erfindung verlässt.

Gegenstand der vorliegenden Erfindung ist somit - gemäß einem **ersten** Aspekt der vorliegenden Erfindung - eine Instant-Getränkezusammensetzung, insbesondere zur Herstellung eines vorzugsweise nichtkariogenen und/oder kalorienreduzierten Instant-Getränks durch Aufbereiten mit einer trinkbaren Flüssigkeit, wobei die Zusammensetzung zumindest im Wesentlichen frei von Saccharose ist und wobei die Zusammensetzung in Form eines Granulats und/oder Agglomerats, insbesondere Granulats, vorliegt, wobei die Zusammensetzung
(a) als Granulat- und/oder Agglomeratbildner eine Kombination von Isomaltulose mit mindestens einem Zuckeraustauschstoff und/oder mit mindestens einem von Saccharose verschiedenen Zucker in einem Verhältnis [Isomaltulose : Zuckeraustauschstoff] und/oder [Isomaltulose : von Saccharose verschiedener Zucker] im Bereich von 10 : 1 bis 3 : 1 und in einer Menge von 30 bis 96 Gew.-%, bezogen auf die Zusammensetzung, und
(b) mindestens einen Aroma- und/oder Geschmacksbildner
enthält,
wobei das Granulat und/oder Agglomerat eine diskrete Teilchengrößenverteilung aufweist, wobei mindestens 90 % der Partikel eine Teilchengröße von 0,1 bis 10 mm aufweisen,
wobei die Zusammensetzung, bezogen auf die Zusammensetzung, eine Gesamtrestfeuchte von 0,3 bis 8 Gew.-% aufweist und
wobei die Partikel des Granulats und/oder Agglomerats eine Druckfestigkeit, berechnet als Gewichtsbelastbarkeit pro Partikel, von mindestens 0,01 N aufweisen.

Denn die Anmelderin hat überraschenderweise herausgefunden, dass sich durch den gezielten Einsatz eines Granulat- und/oder Agglomeratbildners auf Basis einer speziellen Kombination von Isomaltulose mit mindestens einem Zuckeraustauschstoff und/oder mit mindestens einem von Saccharose verschiedenen Zucker eine Instant-Getränkezusammensetzung herstellen lässt, welche gegenüber dem Stand der Technik signifikant verbesserte Eigenschaften aufweist: Diesbezüglich haben die Forschungsergebnisse der Anmelderin in völlig überraschender Weise gezeigt, dass es möglich ist, insbesondere hinsichtlich ihrer Stabilität und ihres Löslichkeitsverhaltens verbesserte granulat- und/oder agglomeratbasierte Zusammensetzungen bereitzustellen, welche über eine ausgezeichnete Lagerstabilität und ein verbessertes Riesel- und Löslichkeitsverhalten bei guten Dosiereigenschaften verfügen und welche auch nicht zur Bildung von Stäuben neigen, was die Handhabung sowohl bei der Herstellung als auch bei der Anwendung deutlich verbessert.

Die erfindungsgemäßen Zusammensetzungen weisen dabei in völlig überraschender Weise auch eine verbesserte Inkorporierung bzw. Aufnahme von aroma- bzw. geschmacksbildenden Komponenten auf. Im Rahmen der vorliegenden Erfindung ist es völlig überraschend, dass auf Basis des speziellen Granulat- und/oder Agglomeratbildners - welcher gewissermaßen als Gerüst- bzw. Matrixbildner fungiert - stabile Granulate und/oder Agglomerate mit definierter Strukturgebung bereitgestellt werden können, in welche die Aroma- bzw. Geschmackskomponenten in hervorragender Weise eingelagert werden können.

Darüber hinaus zeichnet sich die erfindungsgemäße Instant-Getränkezusammensetzung dadurch aus, dass diese sowohl aus ernährungsphysiologischer als auch aus zahnmedizinischer Sicht deutlich verbessert ist, da sowohl der Brennwert als auch die Kariogenität gegenüber handelsüblichen Instant-Getränkezusammensetzungen deutlich verringert sind. Dabei sind die organoleptischen Eigenschaften der erfindungsgemäßen Zusammensetzung insbesondere auch dahingehend verbessert, dass die resultierenden Instant-Getränke insbesondere im Hinblick auf ihren Süßgeschmack mit denen von saccharosehaltigen Instant-Getränken vergleichbar sind. Die erfindungsgemäßen Zusammensetzungen bzw. die daraus hergestellten Instant-Getränke weisen eine natürlich schmeckende Süße auf. Insbesondere weisen die mit der erfindungsgemäßen Zusammensetzung zubereiteten Instant-Getränke einen natürlichen Süßgeschmack ohne nachteiligen bitteren Beigeschmack auf.

Im Hinblick auf die Instant-Getränkezusammensetzung nach der Erfindung ist eine wesentliche Idee der vorliegenden Erfindung somit darin zu sehen, dass als Granulat- und/oder Agglomeratbildner eine spezielle Kombination von Isomaltulose einerseits mit mindestens einem Zuckeraustauschstoff bzw. einem von Saccharose verschiedenen Zucker eingesetzt wird. Diesbezüglich werden in völlig überraschender Weise besonders gute Ergebnisse hinsichtlich der resultierenden Granulate und/oder Agglomerate erreicht, insbesondere was deren Stabilität, Schütt- bzw. Rieselfähigkeit, Dosierbarkeit, Löslichkeitsverhalten und dergleichen anbelangt. Darüber hinaus ist es im Rahmen der vorliegenden Erfindung gelungen, Granulate und/oder Agglomerate bereitzustellen, welche auch auf Basis der diesbezüglich eingesetzten granulat- und/oder agglomeratbildenden Komponenten einen hervorragenden Geschmack sowie eine definierte Süße aufweisen.

Der Begriff "Granulat", wie er erfindungsgemäß verwendet wird, ist dabei sehr breit zu verstehen und bezieht sich insbesondere auf eine Bereitstellung der erfindungsgemäßen Zusammensetzung in Form von kleinen, insbesondere festen und gegebenenfalls porösen Partikeln, wie Körnern oder Kugeln, mit definierter Größe, wobei die dem Granulat zugrundeliegenden Partikel bzw. Teilchen im Allgemeinen eine makroskopische Größe aufweisen, insbesondere auf Basis der nachfolgend definierten Teilchengrößen bzw. -durchmesser. Insbesondere können die Granulatpartikel auch uneben ausgebildet sein bzw. keine harmonische geometrische Form aufweisen. Erfindungsgemäß kann es möglich sein, dass die Granulatpartikel dergestalt ausgebildet sind, dass die Form einer Kugel, eines Stäbchens, eines Zylinders usw. im Allgemeinen ungefähr und/oder andeutungsweise erhalten ist.

Gleichermaßen können die den Granulaten zugrundeliegenden Teilchen bzw. Partikel mehr oder weniger porös ausgebildet sein. Zu weitergehenden Einzelheiten zu dem Begriff der Granulate kann insbesondere verwiesen werden auf Römpp Chemielexikon, 10. Auflage, Georg-Thieme-Verlag, Stuttgart/New York, Band 2, 1997, Seite 1600, Stichwort: "Granulate", sowie die dort referierte Literatur, deren jeweiliger Inhalt durch Bezugnahme eingeschlossen ist.

Was den Begriff "Agglomerat" betrifft, wie er erfindungsgemäß verwendet wird, so ist auch dieser Begriff sehr umfassend und breit zu verstehen und bezeichnet ganz allgemein insbesondere poröse Partikel beliebiger Geometrie und Größe, welche aus einem Verbund kleinerer Bestandteile bzw. Ausgangspartikel gebildet sind.

Der Begriff "Granulat- und/oder Agglomeratbildner", wie er im Rahmen der vorliegenden Erfindung verwendet wird, ist sehr breit zu verstehen und bezieht sich insbesondere auf die erfindungsgemäß angeführten Substanzen zur Ausbildung einer Träger- oder Matrixstruktur bzw. auf ein Träger- und/oder Matrixmaterial zur Ausbildung eines aus Partikeln bzw. Teilchen bestehenden Granulats und/oder Agglomerats. Der Granulat- und/oder Agglomeratbildner bildet sozusagen die Matrix bzw. das Gerüst des Granulats bzw. Agglomerats bzw. der einzelnen Partikel des Granulats und/oder Agglomerats. Erfindungsgemäß kann der Granulat- und/oder Agglomeratbildner auf einer Mischung, insbesondere homogenen Mischung, von Substanzen bzw. Stoffen basieren, nämlich insbesondere auf Basis von Isomaltulose einerseits und einem Zuckeraustauschstoff bzw. einem von Saccharose verschiedenen Zucker andererseits, wie nachfolgend noch angeführt. Im Rahmen der vorliegenden Erfindung ermöglicht der Granulat- und/oder Agglomeratbildner insbesondere auch die Aufnahme bzw. Inkorporation weiterer Substanzen, wie insbesondere Aroma- bzw. Geschmacksbildner. In dem Granulat- und/oder Agglomeratbildner bzw. dem daraus resultierenden Granulat und/oder Agglomerat können somit die weiteren Inhaltsstoffe der erfindungsgemäßen Zusammensetzung, wie die Aroma- und/oder Geschmacksstoffe, aufgenommen bzw. inkorporiert bzw. eingelagert sein. In diesem Zusammenhang können die zu inkorporierenden Substanzen gleichermaßen an der Ausbildung der Granulate und/oder Agglomerate beteiligt sein. Der Granulat- und/oder Agglomeratbildner ermöglicht auch eine insbesondere homogene und/oder insbesondere langzeitstabile Mischung der jeweiligen Komponenten bzw. Inhaltsstoffe. Darüber hinaus kann der Granulat- und/oder Agglomeratbildner auch nach Art eines Füllstoffs fungieren, was insbesondere auch zu einer Verbesserung der Dosierbarkeit der Instant-Getränkezusammensetzungen nach der Erfindung führt. Der Granulat- und/oder Agglomeratbildner führt insbesondere zur Ausbildung formstabiler und beständiger Granulate und/oder Agglomerate. Der Granulat- und/oder Agglomeratbildner kann gleichermaßen auch als Süßungsmittel fungieren bzw. eingesetzt werden, insbesondere da erfindungsgemäß süß schmeckende Substanzen als granulat- und/oder agglomeratbildende Komponenten eingesetzt werden.

Die erfindungsgemäß verwendete Isomaltulose (welche z. B. unter der Handelsbezeichnung Palatinose^{®} erhältlich ist) stellt insbesondere ein Disaccharid dar, das üblicherweise aus Rübenzucker gewonnen werden kann und auch als natürlicher Bestandteil von Honig oder Zuckerrohr vorkommt und dessen natürliche Süße der des Zuckers (Saccharose) nahekommt. Um eine mit Zucker vergleichbare Süßkraft zu erreichen, kann die Isomaltulose zur Ergänzung gegebenenfalls in Kombination mit von Saccharose verschiedenen Zuckern, Süßstoffen oder Zuckeraustauschstoffen eingesetzt werden. Isomaltulose weist den zentralen Vorteil auf, dass diese nichtkariogen ist, d. h. von Karies erzeugenden Bakterien der Mundflora nicht zur Säurebildung verwendet werden kann. Genau wie Zucker wird Isomaltulose verstoffwechselt, wobei der kalorische Wert etwa 4 kcal/g beträgt. Im Gegensatz zu Zucker findet die Verstoffwechselung von Isomaltulose jedoch wesentlich langsamer statt, so dass die glykämische Wirkung sehr niedrig ist und die Glucose dem Körper über einen längeren Zeitraum zur Verfügung gestellt wird. Für den Menschen bedeutet dies insbesondere Folgendes: Wenn die Glucose nur langsam ins Blut übergeht, bleibt der Blutzuckerspiegel stabiler, und dem Körper steht die Energie aus dem Kohlenhydrat über einen längeren Zeitraum zur Verfügung. Dies hat auch zur Folge, dass eine Nutzung der aus der Glucose gewonnenen chemischen Energie für physiologische Prozesse erfolgen kann, wobei zumindest im Wesentlichen keine Umwandlung bzw. Speicherung in Form von Fetten erfolgt.

Im Hinblick auf den im Rahmen der erfindungsgemäßen Zusammensetzung eingesetzten Granulat- und/oder Agglomeratbildner spielt die gezielte Kombination von Isomaltulose einerseits mit mindestens einem Zuckeraustauschstoff bzw. mit mindestens einem von Saccharose verschiedenen Zucker eine zentrale Rolle hinsichtlich der Ausbildung spezieller Produkteigenschaften. So werden auf Basis der zweckgerichteten Kombination der jeweiligen Substanzen Granulate und/oder Agglomerate mit den zuvor beschriebenen verbesserten Eigenschaften erhalten. Durch die gezielte Verwendung von Isomaltulose einerseits und den Komponenten auf Basis eines Zuckeraustauschstoffes und/oder eines von Saccharose verschiedenen Zuckers andererseits wird gleichermaßen die Aufnahme bzw. Inkorporation von aroma- und geschmacksbildenden Komponenten in das Granulat und/oder Agglomerat ermöglicht bzw. weiterführend verbessert.

Der Begriff "Zuckeraustauschstoff', wie er im Rahmen der vorliegenden Erfindung verwendet wird, ist sehr breit zu verstehen und betrifft insbesondere eine Sammelbezeichnung für Stoffe, welche insbesondere anstelle von Saccharose zur Süßung von Lebensmitteln verwendet werden können. Im Gegensatz zu den mitunter intensiv und künstlich schmeckenden Süßstoffen, von denen der Begriff der Zuckeraustauschstoffe im Allgemeinen abgegrenzt wird, werden Zuckeraustauschstoffe technologisch wie Saccharose eingesetzt, d. h. sie besitzen einen "Körper" und einen physiologischen Brennwert (nutritive Zuckeraustauschstoffe). Die Süßkraft entspricht in weiten Grenzen etwa der von Saccharose. Der physiologische Vorteil der Zuckeraustauschstoffe im Vergleich zur Saccharose liegt in der insulinunabhängigen Metabolisierung, was einen Vorteil für Diabetiker darstellt, und in der verminderten kariogenen Wirkung. Für einige Zuckeraustauschstoffe ist sogar eine antikariogene Wirkung beschrieben. Aufgrund ihrer Herkunft sowie ihrer chemischen Struktur sind die natürlich vorkommenden Zuckeraustauschstoffe von den Süßstoffen abzugrenzen. Für weitergehende Einzelheiten zu dem Begriff der Zuckeraustauschstoffe kann beispielsweise verwiesen werden auf Römpp Lexikon Chemie, Band 6, 10. Auflage, Georg-Thieme-Verlag, Stuttgart/New York, 1999, Seite 5098 bis 5100, Stichwort: "Zuckeraustauschstoffe", und auf Römpp Lexikon Lebensmittelchemie, 1. Auflage, Georg-Thieme-Verlag, Stuttgart/New York, 1995, Seite 955, Stichwort: "Zuckeraustauschstoffe" sowie auf die dort jeweils referierte Literatur.

Durch die gezielte Verwendung von Substanzen auf Basis von Zuckeraustauschstoffen bzw. von Saccharose verschiedenen Zuckern als Bestandteil bzw. Komponenten des Isomaltulose-basierten Granulat- und/oder Agglomeratbildners kann zudem bei Bereitstellung eines natürlichen Süßgeschmacks eine signifikante Kalorienreduktion erreicht werden.

Die vorgenannten Substanzen bilden gewissermaßen - ohne sich auf diese Theorie beschränken zu wollen - das Grundgerüst bzw. die Matrix der in Granulat- und/oder Agglomeratform vorliegenden erfindungsgemäßen Instant-Getränkezusammensetzung bzw. der diesbezüglichen Teilchen und/oder Partikel, in welche die Geschmacksbildner sozusagen angelagert bzw. eingelagert bzw. inkorporiert werden können.

Im Rahmen der vorliegenden Erfindung ist es vorgesehen, dass die Zusammensetzung (a) den Granulat- und/oder Agglomeratbildner in einer Menge von 30 bis 96 Gew.-%, ganz besonders bevorzugt 50 bis 95 Gew.-%, bezogen auf die Zusammensetzung und/oder das Granulat und/oder Agglomerat, enthält.

Erfindungsgemäß kommt auch dem Verhältnis der dem Granulat- und/oder Agglomeratbildner zugrundeliegenden Komponenten zueinander, insbesondere hinsichtlich der Ausbildung stabiler und für die Aufnahme der Aroma- bzw. Geschmacksbestandteile hervorragend geeigneter Granulate und/oder Agglomerate, eine große Bedeutung zu:

So ist es erfindungsgemäß vorgesehen, dass die Zusammensetzung nach der Erfindung die Isomaltulose einerseits und den Zuckeraustauschstoff und/oder den von Saccharose verschiedenen Zucker andererseits in einem Verhältnis [Isomaltulose : Zuckeraustauschstoff] und/oder [Isomaltulose : von Saccharose verschiedener Zucker] im Bereich von 10 : 1 bis 3 : 1 enthält.

Zudem ist es erfindungsgemäß vorteilhaft, wenn die Zusammensetzung nach der Erfindung den Zuckeraustauschstoff einerseits und den von Saccharose verschiedenen Zucker andererseits in einem Verhältnis von [Zuckeraustauschstoff : von Saccharose verschiedener Zucker] im Bereich von 100 : 1 bis 1 : 70, insbesondere 60 : 1 bis 1 : 30, vorzugsweise 40 : 1 bis 1 : 10, bevorzugt 20: 1 bis 1 : 1, ganz besonders bevorzugt 10 : 1 bis 2 : 1, enthält.

Erfindungsgemäß kann es aber auch vorgesehen sein, dass die Zusammensetzung nach der Erfindung entweder eine Kombination von Isomaltulose mit einem Zuckeraustauschstoff einerseits, welche erfindungsgemäß bevorzugt ist, oder eine Kombination von Isomaltulose mit einem von Saccharose verschiedenen Zucker andererseits aufweist.

Was die erfindungsgemäß eingesetzte Menge an Isomaltulose betrifft, so kann diese in weiten Bereichen variieren. Erfindungsgemäß hat es sich insbesondere bewährt, wenn die Zusammensetzung nach der Erfindung die Isomaltulose in einer Menge von 30 bis 92 Gew.-%, besonders bevorzugt 40 bis 90 Gew.-%, bezogen auf die Zusammensetzung und/oder das Granulat und/oder Agglomerat, enthält.

Erfindungsgemäß kann es vorgesehen sein, dass die Zusammensetzung den von Saccharose verschiedenen Zucker und/oder den Zuckeraustauschstoff in einer Menge von 1 bis 70 Gew.-%, insbesondere 2 bis 70 Gew.-%, vorzugsweise 5 bis 70 Gew.-%, bezogen auf die Zusammensetzung und/oder das Granulat und/oder Agglomerat, enthält.

Als erfindungsgemäß bevorzugte Ausführungsform hat sich erwiesen, wenn als Granulat- und/oder Agglomeratbildner eine Kombination von Isomaltulose mit mindestens einem Zuckeraustauschstoff eingesetzt wird. Zuckeraustauschstoffe weisen im Vergleich zu den von Saccharose verschiedenen Zuckern einen noch weiter verringerten Brennwert sowie eine mit Saccharose vergleichbare Süßkraft auf, was sich insbesondere auf die Dosierbarkeit und den natürlichen Süßungsgeschmack positiv auswirkt.

Die Zusammensetzung nach der Erfindung sollte den Zuckeraustauschstoff in einer Menge von 2 bis 60 Gew.-%, insbesondere 5 bis 60 Gew.-%, vorzugsweise 10 bis 60 Gew.-%, bezogen auf die Zusammensetzung und/oder das Granulat und/oder Agglomerat, enthalten. So werden einerseits deutlich bessere organoleptische Eigenschaften erzielt; andererseits lässt sich die Verarbeitbarkeit signifikant steigern, da insbesondere bei der vorgenannten Menge eine Klumpenbildung zusätzlich verhindert wird.

Was den im Rahmen der erfindungsgemäßen Instant-Getränkezusammensetzung verwendbaren Zuckeraustauschstoff als solchen anbelangt, so kann dieser aus der Gruppe der Zuckeralkohole, insbesondere aus der Gruppe von Erythrit (Erythritol), Mannit (Mannitol), Xylit (Xylitol), Sorbit (Sorbitol), Isomaltit bzw. Isomalt, Maltit (Maltitol), Lactit (Lactitol), Galactit (Galactitol) sowie deren Mischungen und Kombinationen ausgewählt sein. Besonders gute Ergebnisse werden jedoch bei der Verwendung von Erythrit, Mannit, Xylit, Isomaltit und deren Mischungen, insbesondere Xylit, erzielt.

Der im Rahmen der Erfindung verwendete Begriff der Zuckeralkohole ist dabei sehr breit zu verstehen und bezieht sich insbesondere auf eine Gruppenbezeichnung für im Allgemeinen kristalline, gut wasserlösliche Polyhydroxyverbindungen (Polyole), die durch Reduktion der Carbonylfunktion aus Zuckern entstehen. Hierbei werden insbesondere Monosaccharid-Zuckeralkohole und Disaccharid-Zuckeralkohole unterschieden. Neben ihrem geringen Brennwert, welcher im Allgemeinen nur bei circa 2,4 kcal/g liegt, zeichnen sich die zur Gruppe der Zuckeraustauschstoffe gehörenden Zuckeralkohole durch ihre nichtkariogenen Eigenschaften aus. Insbesondere durch die Verwendung von Xylit kann das Kariesrisiko noch weiter gesenkt werden, da Xylit nicht nur nichtkariogen, sondern sogar antikariogen ist. Zusammensetzungen, welche Xylit enthalten, tragen somit gewissermaßen aktiv zur Vermeidung der Entstehung von Karies bei. Für weitergehende Einzelheiten zu dem Begriff der Zuckeralkohole kann insbesondere verwiesen werden auf Römpp Lexikon Chemie, 10. Auflage, Georg-Thieme-Verlag, Stuttgart/New York, Band 6, 1999, Seite 5097, Stichwort: "Zuckeralkohole", und auf Römpp Lexikon Lebensmittelchemie, 1. Auflage, Georg-Thieme-Verlag, Stuttgart/New York, 1995, Seiten 1953/954, Stichwort: "Zuckeralkohole" sowie auf die dort jeweils referierte Literatur, deren jeweiliger Inhalt durch Bezugnahme eingeschlossen ist.

Erfindungsgemäß kann es auch - gemäß einer weiteren erfindungsgemäßen Ausführungsform - vorgesehen sein, dass die erfindungsgemäße Instant-Getränkezusammensetzung einen Granulat- und/oder Agglomeratbildner auf Basis einer Kombination von Isomaltulose einerseits und mindestens einem von Saccharose verschiedenen Zucker andererseits aufweist. In diesem Fall kann die Zusammensetzung den von Saccharose verschiedenen Zucker in einer Menge von 1 bis 50 Gew.-%, insbesondere 2 bis 50 Gew.-%, vorzugsweise 3 bis 50 Gew.-%, besonders bevorzugt 5 bis 50 Gew.-%, bezogen auf die Zusammensetzung und/oder das Granulat und/oder Agglomerat, enthalten.

Was den von Saccharose verschiedenen Zucker betrifft, so kann dieser insbesondere aus der Gruppe von Mannose, Maltose, Lactose, Glucose (Dextrose), Fructose, Xylose, Maltodextrin und deren Mischungen ausgewählt sein. Zwar weisen die zuvor genannten Zucker im Vergleich zu den Zuckeraustauschstoffen eine leicht erhöhte Kariogenität auf, gegenüber der üblicherweise verwendeten Saccharose ist die Kariogenität jedoch immer noch deutlich herabgesetzt. Weiterhin lassen sich durch die von Saccharose verschiedenen Zucker die erfindungsgemäßen Instant-Getränkezusammensetzungen hinsichtlich der geschmacklichen Eigenschaften modulieren bzw. maßschneidern, da so auch geringere Süßegrade bei gleichem Träger- bzw. Matrixvolumen erzeugt werden können. Insbesondere Personen im Erwachsenenalter empfinden auf den Geschmack von Kindern abgestimmte Instant-Getränkezusammensetzungen häufig als zu süß, was durch den erfindungsgemäßen Einsatz der zuvor genannten Zucker vermieden werden kann.

Als besonders vorteilhaft hat sich erwiesen, wenn für den von Saccharose verschiedenen Zucker Maltodextrin eingesetzt wird. Durch Maltodextrin kann die Zusammensetzung einerseits hinsichtlich ihrer organoleptischen Eigenschaften, insbesondere im Hinblick auf die Süßkraft, sowie andererseits in Bezug auf die Stabilität der Agglomerate und/oder Granulate nochmals verbessert werden. Insbesondere sind die jeweiligen Partikel bzw. Teilchen deutlich stabiler und bersten weniger schnell. Auch die Abriebfestigkeit ist deutlich erhöht, und die Handhabbarkeit des Granulier- und/oder Agglomerationsprozesses ist verbessert, insbesondere da Maltodextrin ein äußerst gutes Bindemittel zur Aufnahme weiterer Komponenten darstellt. Zudem ist es vorteilhaft, wenn der DE-Wert von Maltodextrin vorzugsweise höchstens 19, bevorzugt höchstens 12, besonders bevorzugt höchstens 6, ganz besonders bevorzugt höchstens 5, beträgt. Der DE-Wert kann als Maß dazu herangezogen werden, in welchem Abbau- bzw. Hydrolysegrad das eingesetzte Maltodextrin vorliegt. Im Allgemeinen weist ein Maltodextrin mit niedrigem DE-Wert einen höheren Anteil an Polysacchariden bzw. hochmolekularen Sacchariden und einen geringeren Anteil an niedermolekularen Sacchariden auf, während ein Maltodextrin mit hohem DE-Wert einen höheren Anteil an niedermolekularen Sacchariden und einen geringeren Anteil an Polysacchariden aufweist. Durch den geringeren Anteil niedermolekularer Saccharide bei Maltodextrin mit kleineren DE-Werten kann die Kariogenität der Zusammensetzung noch weiter verringert werden.

Zudem hat sich ebenfalls der Einsatz einer Kombination von Fructose und Glucose, insbesondere in Form von Glucosesirup und/oder Invertzucker und/oder Invertsirup, bewährt, da auf diese Weise äußerst gute und natürliche Süßungsprofile bzw. natürlicher Süßgeschmack der erfindungsgemäßen Instant-Getränkezusammensetzung erzielt werden können. Auch besitzen Glucose- und Invertsirup aufgrund ihrer Konsistenz bzw. Klebrigkeit ausgezeichnete Eigenschaften als Bindemittel zur Aufnahme weiterer Komponenten, insbesondere von Aroma- und/oder Geschmacksbildnern.

Durch die gezielte Verwendung von Substanzen auf Basis von Zuckeraustauschstoffen bzw. von Saccharose verschiedenen Zuckern als Bestandteil bzw. Komponenten des isomaltulosebasierten Granulatbildners kann zudem bei Bereitstellung eines natürlichen Süßgeschmacks eine signifikante Kalorienreduktion erreicht werden.

Weiterhin ist es erfindungsgemäß von Vorteil, wenn die Instant-Getränkezusammensetzung zumindest im Wesentlichen frei ist von Süßstoffen, insbesondere da diese ernährungsphysiologisch nicht immer optimal sind, insbesondere was die Ernährung von Kindern betrifft. Dennoch kann es - wenn auch erfindungsgemäß weniger bevorzugt - vorgesehen sein, dass zur Ergänzung bzw. Verfeinerung des Süßeprofils der Zusammensetzung mindestens ein Süßstoff zugesetzt wird. Die eingesetzte Menge an Süßstoff(en) kann dabei 0,001 bis 5 Gew.-%, insbesondere 0,01 bis 4 Gew.-%, vorzugsweise 0,05 bis 3 Gew.-%, bevorzugt 0,1 bis 1 Gew.-%, bezogen auf die Zusammensetzung und/oder das Granulat, betragen. Was die Art des Süßstoffs betrifft, so kommt diesbezüglich der Einsatz einer Vielzahl von Süßstoffen in Betracht. Bevorzugterweise wird der Süßstoff aus der Gruppe von Acesulfam, Aspartam, Aspartam-Acesulfam, Cyclamat, Saccharin, Sucralose, Thaumatin, Neophesperidin, Neotam, Alitam, Brazzein, Hernandulcin, Lugdunam, Monellin, Pentadin und Steviosid sowie deren Mischungen, insbesondere Aspartam, Cyclamat, Saccharin, Sucralose und Steviosid sowie deren Mischungen, bevorzugt Sucralose, ausgewählt.

Was den erfindungsgemäß eingesetzten (b) Aroma- und/oder Geschmacksbildner betrifft, so kann dieser in einer Vielzahl von Formen vorliegen und in variablen Mengen eingesetzt werden, um ein breite Palette sowohl an Geschmacksrichtungen als auch an Geschmacksintensitäten zu erreichen.

So kann die Zusammensetzung nach der Erfindung den mindestens einen Aromaund/oder Geschmacksbildner in einer Menge von 0,1 bis 75 Gew.-%, insbesondere 0,5 bis 60 Gew.-%, besonders bevorzugt 1 bis 50 Gew.-%, ganz besonders bevorzugt 2 bis 25 Gew.-%, bezogen auf die Zusammensetzung und/oder das Granulat und/oder Agglomerat, enthalten.

Was die Qualität bzw. Art des erfindungsgemäß eingesetzten Aroma- und/oder Geschmacksbildners anbelangt, so kann es sich hierbei insbesondere um einen Aroma- und oder Geschmacksbildner aus der Gruppe von Extrakten, insbesondere Pflanzenextrakten, Fruchtextrakten, Kräuterextrakten, Teeextrakten und deren Mischungen handeln. Was die diesbezüglich eingesetzten Mengen anbelangt, so können diese 0,1 bis 10 Gew.-%, bevorzugt 0,25 bis 8 Gew.-%, besonders bevorzugt 0,5 bis 6 Gew.-%, ganz besonders bevorzugt 1 bis 5 Gew.-%, betragen, bezogen auf die Zusammensetzung und/oder das Granulat und/oder Agglomerat.

Auch ist es erfindungsgemäß möglich, dass der Aroma- und/oder Geschmacksbildner ausgewählt ist aus künstlichen, naturidentischen und oder natürlichen Aromen und/oder Aromastoffen. Durch den Einsatz von Aromen bzw. Aromastoffen kann die Geschmacksrichtung noch weiter intensiviert oder können verschiedene Geschmacksrichtungen besser kombiniert werden. Die in diesem Zusammenhang erfindungsgemäß eingesetzten Mengen können im Bereich von vorzugsweise 0,01 bis 10 Gew.-%, bevorzugt 0,1 bis 8 Gew.-%, besonders bevorzugt 0,3 bis 5 Gew.-%, ganz besonders bevorzugt 0,5 bis 3 Gew.-%, variieren, bezogen auf die Zusammensetzung und/oder das Granulat und/oder Agglomerat.

Auch kann der erfindungsgemäß eingesetzte Aroma- und/oder Geschmacksbildner aus Pflanzenpulvern, Fruchtpulvern und/oder Saftpulvern ausgewählt sein, vorzugsweise in einer Menge von 0,01 bis 8 Gew.-%, bevorzugt 0,05 bis 6 Gew.-%, besonders bevorzugt 0,1 bis 4 Gew.-%, ganz besonders bevorzugt 0,15 bis 3 Gew.-%, bezogen auf die Zusammensetzung und/oder das Granulat und/oder Agglomerat.

In Bezug auf die erfindungsgemäße Zusammensetzung können die zuvor genannten Geschmacksbildner auch kombiniert werden, so dass insgesamt eine individuelle Geschmacksgebung und -intensität vorgenommen werden kann.

Auch ist es möglich, dass der erfindungsgemäßen Zusammensetzung zur Modulierung von Eigenschaften, wie beispielsweise pH-Wert, Stabilität, Optik oder Lösungsverhalten, weitere Substanzen bzw. Additive zugesetzt werden.

So kann es erfindungsgemäß vorgesehen sein, dass die Instant-Getränkezusammensetzung nach der Erfindung Säuerungsmittel, insbesondere aus der Gruppe von Genusssäuren, vorzugsweise Citronensäure, Weinsäure und Äpfelsäure, enthält, vorzugsweise in einer Menge von 0,01 bis 5 Gew.-%, bevorzugt 0,1 bis 4 Gew.-%, ganz besonders bevorzugt 0,5 bis 2 Gew.-%, bezogen auf die Zusammensetzung und/oder das Granulat und/oder Agglomerat.

Weiterhin kann die erfindungsgemäße Instant-Getränkezusammensetzung Farbstoffe, insbesondere natürliche und/oder naturidentische Farbstoffe, enthalten, vorzugsweise in einer Menge von 0,01 bis 5 Gew.-%, bevorzugt 0,1 bis 4 Gew.-%, ganz besonders bevorzugt 0,5 bis 3 Gew.-%, bezogen auf die Zusammensetzung und/oder das Granulat und/oder Agglomerat.

Die erfindungsgemäße Zusammensetzung bzw. das Granulat und/oder Agglomerat zeichnet sich insbesondere dadurch aus, dass es gelungen ist, eine Instant-Getränkezusammensetzung bereitzustellen, welche zumindest im Wesentlichen frei ist von Saccharose und trotzdem sowohl eine hervorragende Süße - bei nichtkariogenen Eigenschaften - aufweist als auch in Form stabiler und staubfreier, gut zu dosierender Granulate und/oder Agglomerate vorliegt. Dies wird im Rahmen der vorliegenden Erfindung durch den gezielten Einsatz von Isomaltulose in Kombination mit Zuckeraustauschstoffen und/oder von Saccharose verschiedenen Zuckern als Granulat- und/oder Agglomeratbildner erreicht.

Allenfalls kann es erfindungsgemäß in Frage kommen, dass die erfindungsgemäße Zusammensetzung Saccharose in geringen Mengen enthält, wodurch die positiven Eigenschaften der erfindungsgemäßen Zusammensetzung zumindest im Wesentlichen nicht nachteilig beeinflusst werden. So kann die Zusammensetzung Saccharose in einer Menge von höchstens 5 Gew.-%, insbesondere höchstens 2 Gew.-%, vorzugsweise höchstens 1 Gew.-%, besonders bevorzugt höchstens 0,5 Gew.-%, ganz besonders bevorzugt jedoch 0 Gew.-%, bezogen auf die Zusammensetzung und/oder das Granulat und/oder Agglomerat, enthalten. Erfindungsgemäß ist es somit ganz besonders bevorzugt, dass die Zusammensetzung nach der Erfindung keine Saccharose enthält bzw. frei von Saccharose und somit saccharosefrei ist.

Was die erfindungsgemäße Instant-Getränkezusammensetzung weiterhin anbelangt, so kann es vorgesehen sein, dass diese in Form eines kornförmigen und/oder zumindest im Wesentlichen kugelförmigen, insbesondere kornförmigen Granulats und/oder Agglomerats vorliegt. Dabei ist es erfindungsgemäß gleichermaßen möglich, dass die Granulate und/oder Agglomerate porös ausgebildet sind.

Die Teilchen bzw. Partikel der erfindungsgemäßen Zusammensetzung weisen zudem eine hohe Stabilität bzw. mechanische Festigkeit auf, was auch einer unerwünschten Staubbildung entgegenwirkt. So weisen die Teilchen und/oder Partikel der erfindungsgemäßen Zusammensetzung, insbesondere des Granulats und/oder Agglomerats, eine Druck- bzw. Berstfestigkeit (Gewichtsbelastbarkeit pro Teilchen bzw. Partikel) von mindestens 0,01 N, insbesondere mindestens 0,05 N, vorzugsweise mindestens 0,1 N, bevorzugt mindestens 0,5 N, besonders bevorzugt mindestens 1 N, auf. In diesem Zusammenhang können die Teilchen und/oder Partikel der Zusammensetzung, insbesondere des Granulats und/oder Agglomerats, eine Druck- bzw. Berstfestigkeit (Gewichtsbelastbarkeit pro Teilchen bzw. Partikel) im Bereich von 0,01 N bis 10 N, insbesondere 0,05 N bis 5 N, vorzugsweise 0,1 N bis 3 N, bevorzugt 0,2 N bis 2,5 N, besonders bevorzugt 0,5 N bis 2 N, aufweisen.

Um das Lösungsverhalten sowie die Dosierungseigenschaften weiter zu optimieren, kann eine definierte Einstellung der Teilchen- bzw. Partikelgröße erfolgen. Eine Einstellung der Partikel- bzw. Teilchengrößen erfolgt dabei insbesondere über die Granulier- bzw. Agglomerierbedingungen, was dem Fachmann als solches bekannt ist. Zudem kann eine nachfolgende Einstellung bzw. Anpassung mittels Sieben oder gegebenenfalls Brechen oder Zerkleinern bzw. Klassieren erfolgen. Die Bestimmung der Partikel- bzw. Teilchengrößen kann ebenfalls durch dem Fachmann an sich bekannte Methoden erfolgen, z. B. durch Siebanalyse, granulometrisch, durch Lichtbeugung oder durch mikroskopische Verfahren.

Bevorzugterweise sollte die Teilchengröße der Partikel (Partikelgröße) der erfindungsgemäßen Zusammensetzung, insbesondere des Granulats und/oder Agglomerats, im Bereich von 0,1 bis 10 mm, insbesondere 0,2 bis 8 mm, vorzugsweise 0,5 bis 6 mm, besonders bevorzugt 0,7 bis 4 mm, ganz besonders bevorzugt 0,8 bis 3 mm, betragen.

In diesem Zusammenhang kann es zudem vorgesehen sein, dass die mittlere Teilchengröße (mittlere Partikelgröße), insbesondere die mittlere Teilchengröße D₅₀, der Partikel der Zusammensetzung, insbesondere des Granulats und/oder Agglomerats, im Bereich von 0,2 bis 8 mm, insbesondere 0,3 bis 6 mm, vorzugsweise 0,8 bis 4,5 mm, besonders bevorzugt 0,9 bis 4 mm, ganz besonders bevorzugt 1 bis 2 mm, liegt.

Darüber hinaus ist es auch vorteilhaft, wenn die Zusammensetzung nach der Erfindung, insbesondere das Granulat und/oder Agglomerat, eine diskrete Teilchengrößenverteilung aufweist, wobei mindestens 90 % der Partikel eine Teilchen- bzw. Partikelgröße von 0,1 bis 10 mm, insbesondere mindestens 92 % der Partikel eine Partikelgröße von 0,2 bis 8 mm, vorzugsweise mindestens 95 % der Partikel eine Partikelgröße von 0,5 bis 6 mm, besonders bevorzugt mindestens 97 % der Partikel eine Partikelgröße von 0,7 bis 4 mm, ganz besonders bevorzugt mindestens 99 % der Partikel eine Partikelgröße von 0,8 bis 3 mm, aufweisen.

Aufgrund der spezifischen und zuvor definierten Beschaffenheit der einzelnen Partikel des Granulats und/oder Agglomerats wird gewährleistet, dass die erfindungsgemäße Instant-Getränkezusammensetzung ein gutes Löslichkeitsverhalten aufweist und zudem nicht klumpt. Weiterhin entstehen so keine Stäube, was insbesondere die Dosierungseigenschaften verbessert und Verluste beim Dosieren minimiert bzw. die Handhabung erleichtert.

Die erfindungsgemäße Instant-Getränkezusammensetzung zeichnet sich zudem durch eine spezielle Schüttdichte aus. So kann das Granulat und/oder Agglomerat eine Schüttdichte von 100 bis 800 g/l, insbesondere 150 bis 700 g/l, vorzugsweise 200 bis 600 g/l, bevorzugt 300 bis 500 g/l, besonders bevorzugt 350 bis 450 g/l, aufweisen.

Durch die spezifische Schüttdichte der erfindungsgemäßen Instant-Getränkezusammensetzung liegt ein gewichtsbezogen hoher Volumenanteil vor. Dies führt unter anderem dazu, daß die Dosierfähigkeit der erfindungsgemäßen Instant-Getränkezusammensetzung bei der Zubereitung des betreffenden Instant-Getränks mit einer Trinkflüssigkeit weiter verbessert wird. Zudem wird der massenbezogene Anteil an für die Aufbereitung des Instant-Getränks benötigter Instant-Getränkezusammensetzung reduziert.

Unter dem Begriff der "Schüttdichte" ist im Allgemeinen der Quotient aus der Masse und dem eingenommenen Volumen, das Zwischenräume und, falls zusätzlich vorhanden, auch Hohlräume (z. B. Poren) einschließt, zu verstehen. Zur Bestimmung der Schüttdichte von Pulver bzw. Granulat und/oder Agglomerat kann auf die DIN ISO 607:1984-01 verwiesen werden. Die Schüttdichte kann bestimmt werden, indem man beispielsweise die betreffende Zusammensetzung in einen Messkasten, Messbecher, Messzylinder oder dergleichen schüttet und das Gewicht feststellt. Höher als die Schüttdichte, deren Reziprokes das Schüttvolumen ist, liegt die sogenannte Rütteldichte und erst recht die sogenannte Stampfdichte. Für weitere Einzelheiten zum Begriff der Schüttdichte kann insbesondere verwiesen werden auf Römpp Chemielexikon, 10. Auflage, Georg-Thieme-Verlag, Stuttgart/New York, Band 5, 1998, Seite 3990, Stichwort: "Schüttdichte".

Das in der erfindungsgemäßen Instant-Getränkezusammensetzung eingesetzte Granulat und/oder Agglomerat besitzt zudem einen gewissen Feuchtegehalt (Restfeuchte). So weist die erfindungsgemäße Instant-Getränkezusammensetzung bzw. das Granulat und/oder Agglomerat, bezogen auf die Zusammensetzung und/oder das Granulat und/oder Agglomerat, eine Gesamtrestfeuchte von 0,3 bis 8 Gew.-%, vorzugsweise 0,8 bis 6 Gew.-%, bevorzugt 1 bis 5 Gew.-%, besonders bevorzugt 2 bis 4 Gew.-%, auf. Der maximale Gesamtrestfeuchtegehalt sollte in diesem Zusammenhang 8 Gew.-%, vorzugsweise 6 Gew.-%, bevorzugt 5 Gew.-%, besonders bevorzugt 4 Gew.-%, bezogen auf die Zusammensetzung bzw. das Granulat und/oder Agglomerat, nicht überschreiten. Die Einstellung des Feuchtigkeitsgehaltes bzw. der Gesamtrestfeuchte in dem Granulat und/oder Agglomerat dient einerseits der Erhöhung der Stabilität, insbesondere der Lagerungs- und Alterungsbeständigkeit, und zum anderen der Verbesserung der Verklumpungseigenschaften. In diesem Zusammenhang bezieht sich der Begriff "Gesamtrestfeuchte", wie er im Rahmen der vorliegenden Erfindung verwendet wird, auf den Gesamtfeuchtegehalt der erfindungsgemäßen Zusammensetzung bzw. des Granulats und/oder Agglomerats und umfasst somit sowohl z. B. herstellungsbedingt zugegebene Feuchtigkeit, beispielsweise in Form von Wasser, als auch bereits in den Komponenten inhärent vorhandene Feuchtigkeit, wie beispielsweise Kristallwasser oder dergleichen.

Die erfindungsgemäße Instant-Getränkezusammensetzung sollte in einer Trinkflüssigkeit, insbesondere in Wasser, zumindest im Wesentlichen, insbesondere vollständig, löslich sein, um auf einfache Weise ein Instant-Getränk herzustellen, das auch bei längeren Standzeiten zumindest im Wesentlichen nicht zur Bildung eines Bodensatzes neigt.

Zudem ist es im Rahmen der vorliegenden Erfindung von Vorteil, wenn die erfindungsgemäße Instant-Getränkezusammensetzung zumindest im Wesentlichen, vorzugsweise vollständig, aus dem Granulat und/oder Agglomerat besteht. In diesem Zusammenhang kann das Granulat und/oder Agglomerat insbesondere kornförmige, aber auch andersartige, wie beispielsweise stäbchenförmige oder zylinderförmige, Teilchen sowie deren Mischungen aufweisen. Insgesamt sollte der Staubanteil bzw. der Anteil sehr kleiner Partikel mit deutlich unterhalb der zuvor für die Granulate und/oder Agglomerate angegebenen Größe möglichst gering sein, um das Staub- und Verklumpungsverhalten der erfindungsgemäßen Zusammensetzung weiter zu verbessern.

Zusammenfassend weist die erfindungsgemäße Instant-Getränkezusammensetzung aufgrund ihres Vorliegens in Form von speziellen Granulaten und/oder Agglomeraten eine verbesserte Löslichkeit in der Trinkflüssigkeit auf. Aufgrund der definierten Größe der Granulate und/oder Agglomerate ist die Neigung zur Klumpenbildung sowohl bei Lagerung als auch bei Aufbereitung des Instant-Getränks deutlich reduziert. Auch optisch wird insbesondere durch die diskrete Teilchengrößenverteilung ein ansprechendes Aussehen der erfindungsgemäßen Instant-Getränkezusammensetzung erzielt. Bei der Handhabung, insbesondere sowohl bei der Verpackung als auch bei der Verwendung durch den Verbraucher, neigt die erfindungsgemäße Instant-Getränkezusammensetzung nicht zur Staubbildung.

Weiter zusammenfassend zeichnet sich die erfindungsgemäße Instant-Getränkezusammensetzung insgesamt durch ihre nichtkariogenen Eigenschaften einerseits sowie einen geringen Brennwert andererseits aus, was insbesondere aus dem Einsatz eines speziellen Granulat- und/oder Agglomeratbildners auf Basis von Isomaltulose in Kombination mit mindestens einem Zuckeraustauschstoff und/oder mindestens einem von Saccharose verschiedenen Zucker resultiert. Aufgrund der gegenüber den im Stand der Technik bekannten Instant-Getränkezusammensetzungen deutlich verringerten Kariogenität sowie des verringerten Brennwerts ist die erfindungsgemäße Instant-Getränkezusammensetzung sowohl zahnmedizinisch als auch ernährungsphysiologisch verbessert.

Weiterer Gegenstand der vorliegenden Erfindung - gemäß einem **zweiten** Aspekt - ist ein Verfahren zur Herstellung der Instant-Getränkezusammensetzung nach der Erfindung, insbesondere zur Herstellung eines vorzugsweise nichtkariogenen und/oder kalorienreduzierten Instant-Getränks durch Aufbereiten mit einer trinkbaren Flüssigkeit, in Form eines Granulats und/oder Agglomerats, insbesondere Granulats, insbesondere wie zuvor definiert, wobei das erfindungsgemäße Verfahren die folgenden Verfahrensschritte umfasst:
a) Herstellung einer Mischung, welche (a) mindestens einen Granulat- und/oder Agglomeratbildner auf Basis einer Kombination von Isomaltulose mit mindestens einem von Saccharose verschiedenen Zucker und/oder mit mindestens einem Zuckeraustauschstoff und (b) mindestens einen Aroma- und/oder Geschmacksbildner enthält, wobei die Isomaltulose und der mindestens eine von Saccharose verschiedene Zucker und/oder der mindestens eine Zuckeraustauschstoff in einem Verhältnis [Isomaltulose : Zuckeraustauschstoff] und/oder [Isomaltulose : Zuckeraustauschstoff] im Bereich von 10 : 1 bis 3 : 1 eingesetzt werden;
b) nachfolgende Herstellung eines Granulats und/oder Agglomerats aus der in Schritt a) hergestellten Mischung durch Trocknung unter Einstellung einer diskreten Teilchengrößenverteilung, wobei mindestens 90 % der Partikel eine Teilchengröße von 0,1 bis 10 mm aufweisen, einer Druckfestigkeit, berechnet als Gewichtsbelastbarkeit pro Partikel, von mindestens 0,01 N und einer Gesamtrestfeuchte von 0,3 bis 8 Gew.-%, bezogen auf die Zusammensetzung.

Das Anfeuchten ist aber nicht auf die Zugabe von Wasser beschränkt: In diesem Zusammenhang kann es erfindungsgemäß gleichermaßen vorgesehen sein, dass in Schritt a) die Mischung durch Zugabe, insbesondere Einmischen, von flüssigen Extrakten, insbesondere Pflanzenextrakten, Fruchtextrakten, Tee-Extrakten oder deren Mischungen, angefeuchtet wird. Im Rahmen des erfindungsgemäßen Verfahrens ist es zudem möglich, dass in Schritt a) die Mischung durch Zugabe, insbesondere Einmischen, von Pflanzensäften, Fruchtsäften oder deren Mischungen, angefeuchtet wird. Auf diese Weise wird neben dem Anfeuchten gleichermaßen eine Aromatisierung der erfindungsgemäßen Instant-Getränkezusammensetzung erreicht.

Durch das Anfeuchten in Schritt a) sollte die Mischung auf einen Gesamtfeuchtegehalt von 0,25 bis 15 Gew.-%, insbesondere 0,5 bis 10 Gew.-%, vorzugsweise 1 bis 5 Gew.-%, bezogen auf die Mischung, eingestellt werden, was - wie zuvor beschrieben - durch die Zugabe von Wasser, flüssigen Extrakten bzw. Säften erreicht werden kann. Auf diese Weise wird gewissermaßen die Konsistenz der der erfindungsgemäßen Instant-Getränkezusammensetzung zugrundeliegenden Mischung vorgegeben, so dass auf diese Weise die nachfolgende Granulierung und/oder Agglomerierung sozusagen optimiert wird.

Was die eigentliche Herstellung des Granulats und/oder Agglomerats angeht, so erfolgt diese erfindungsgemäß in einem Schritt b) aus der in Schritt a) hergestellten Mischung in üblichen und dem Fachmann wohlbekannten Granulatoren bzw. Granuliervorrichtungen bzw. Agglomeriervorrichtungen.

Insbesondere kann Schritt b) des erfindungsgemäßen Verfahrens mittels Wirbelschichtgranulierung, Trockengranulierung, Sprühgranulierung oder Agglomerierung erfolgen.

Eine Granulierung und/oder Agglomerierung mit Hilfe der zuvor genannten Granulier- und/oder Agglomerierverfahren eignet sich insbesondere zur Immobilisierung bzw. Inkorporierung bzw. zum Aufbringen der Aroma- und/oder Geschmacksbildner an dem Granulat- und/oder Agglomeratbildner oder dem Träger- bzw. Matrixmaterial, da sich auf diese Weise Parameter, wie beispielsweise Teilchengröße oder Schüttdichte, besonders gut einstellen lassen. Weiterhin handelt es sich hierbei um äußerst effiziente sowie leicht zu handhabende Verfahren, welche dem Fachmann als solche bekannt sind. Durch die Technik des Granulierens und/oder Agglomerierens werden Teilchen bzw. Partikel erhalten, welche sich besonders gut im weiteren Herstellungsverfahren verarbeiten lassen.

Gemäß einer besonders bevorzugten Ausführungsform von Schritt b) erfolgt die Granulierung und/oder Agglomerierung unter Eintrag hoher Scherkräfte. Der Einsatz hoher Scherkräfte ermöglicht eine gute Verarbeitbarkeit der Isomaltulose zu Granulaten und/oder Agglomeraten und zu einem besonders effizienten Auf- bzw. Einbringen des Aroma- und/oder Geschmacksbildners an bzw. in den Granulat- und/oder Agglomeratbildner. Weiterhin führt der Einsatz hoher Scherkräfte bei der Herstellung der erfindungsgemäßen Granulate und/oder Agglomerate - insbesondere im Hinblick auf die spezielle Verwendung von Isomaltulose als granulat- und/oder agglomeratbildende Komponente - zu besonders definierten Partikelstrukturen und -großen der resultierenden Granulate und/oder Agglomerate. Insbesondere resultieren Granulate und/oder Agglomerate mit minimiertem Verklumpungsverhalten, welche zudem einerseits (lager-)stabil sind und andererseits dennoch ein ausgezeichnetes Lösungsverhalten aufweisen.

Was die Herstellung der Mischung in Schritt a) bzw. die Granulierung und/oder Agglomerierung in Schritt b) des erfindungsgemäßen Verfahrens anbelangt, so sollte diesbezüglich insbesondere bei Raumtemperatur, insbesondere bei etwa 20 °C, und/oder bei Umgebungsdruck, insbesondere bei einem Druck von etwa 1.013 hPa, verfahren werden.

In diesem Zusammenhang ist es vorgesehen, dass das Granulat und/oder Agglomerat auf eine Gesamtrestfeuchte von 0,3 bis 8 Gew.-%, vorzugsweise 0,8 bis 6 Gew.-%, bevorzugt 1 bis 5 Gew.-%, besonders bevorzugt 2 bis 4 Gew.-%, bezogen auf das Granulat und/oder Agglomerat, eingestellt wird. Auch hier bezieht sich die Restfeuchte auf die Gesamtmenge an zugegebener Feuchtigkeit und inhärenter Feuchtigkeit, wie Kristallwasser.

Im Rahmen des erfindungsgemäßen Verfahrens kann das erfindungsgemäße Granulat und/oder Agglomerat auf eine Schüttdichte von 100 bis 800 g/l, insbesondere 150 bis 700 g/l, vorzugsweise 200 bis 600 g/l, bevorzugt 300 bis 500 g/l, besonders bevorzugt 350 bis 450 g/l, eingestellt werden.

In diesem Zusammenhang kann es auch vorgesehen sein, dass die Trocknung des Granulats und/oder Agglomerats kontinuierlich, insbesondere in einem Wirbelstromtrockner, erfolgt.

Gleichermaßen ist es aber auch möglich, dass die Trocknung des Granulats und/oder Agglomerats diskontinuierlich bzw. batchweise, insbesondere in einem Wirbelschichttrockner, erfolgt. Gleichermaßen ist auch eine Trocknung durch Mikrowellenbestrahlung oder unter Verwendung eines Bandtrockners möglich.

Was die im Rahmen des erfindungsgemäßen Verfahrens vorgesehene Trocknung des erhaltenen Granulats und/oder Agglomerats weiterhin anbelangt, so kann auch diese bei Raumtemperatur (etwa 20 °C) und einem Druck von etwa 1013 hPa erfolgen. Gleichermaßen ist es jedoch auch möglich, dass die Trocknung des Granulats und/oder Agglomerats bei einer Temperatur von 30 bis 130 °C, insbesondere 40 bis 100 °C, vorzugsweise 70 bis 80 °C, durchgeführt wird. Weiterhin kann es im Rahmen des erfindungsgemäßen Verfahrens vorgesehen sein, dass die Trocknung des Granulats und/oder Agglomerats unter vermindertem Druck, insbesondere unter Vakuum, durchgeführt wird.

Nach erfolgter Trocknung kann das getrocknete Granulat und/oder Agglomerat insbesondere in einer Abkühlvorrichtung und/oder Abkühlzone abgekühlt werden, vorzugsweise auf eine Temperatur von 10 bis 20 °C.

Weiterhin kann es im Rahmen des erfindungsgemäßen Verfahrens vorgesehen sein, dass sich der Trocknung ein Verfahrensschritt des Klassierens anschließt, insbesondere mittels Sieben. Dabei ist es insbesondere möglich, dass das Granulat und/oder Agglomerat auf eine definierte Teilchengröße von 0,1 bis 10 mm, insbesondere 0,2 bis 8 mm, vorzugsweise 0,5 bis 6 mm, besonders bevorzugt 0,7 bis 4 mm, ganz besonders bevorzugt 0,8 bis 3 mm, eingestellt wird. Die Einstellung der Teilchengröße auf einen definierten Bereich verbessert insbesondere die Dosiereigenschaften, da das Granulat und/oder Agglomerat so rieselfähig ist, aber die Bildung von Stäuben vermieden wird.

In diesem Zusammenhang kann es weiterhin vorgesehen sein, dass das Granulat und/oder Agglomerat durch den Schritt des Klassierens auf eine mittlere Teilchengröße, insbesondere eine mittlere Teilchengröße D₅₀, (Partikelgröße) von 0,2 bis 8 mm, insbesondere 0,3 bis 6 mm, vorzugsweise 0,8 bis 4,5 mm, besonders bevorzugt 0,9 bis 4 mm, ganz besonders bevorzugt 1 bis 2 mm, eingestellt wird.

Zudem ist es erfindungsgemäß vorgesehen, dass im Rahmen des erfindungsgemäßen Verfahrens eine Einstellung einer diskreten Teilchengrößenverteilung erfolgt, wobei mindestens 90 % der Partikel eine Teilchen- bzw. Partikelgröße von 0,1 bis 10 mm, insbesondere mindestens 92 % der Partikel eine Partikelgröße von 0,2 bis 8 mm, vorzugsweise mindestens 95 % der Partikel eine Partikelgröße von 0,5 bis 6 mm, besonders bevorzugt mindestens 97 % der Partikel eine Partikelgröße von 0,7 bis 4 mm, ganz besonders bevorzugt mindestens 99 % der Partikel eine Partikelgröße von 0,8 bis 3 mm, aufweisen.

Weiterer Gegenstand der vorliegenden Erfindung - gemäß einem **dritten** Aspekt - ist eine Instant-Getränkezusammensetzung, insbesondere wie zuvor definiert, zur Herstellung eines vorzugsweise nichtkariogenen und/oder kalorienreduzierten Instant-Getränks durch Aufbereiten mit einer trinkbaren Flüssigkeit, insbesondere Wasser, wobei die erfindungsgemäße Instant-Getränkezusammensetzung durch ein wie zuvor definiertes Verfahren erhältlich ist.

Schließlich ist weiterer Gegenstand der vorliegenden Erfindung - gemäß einem **vierten** Aspekt der vorliegenden Erfindung - die Verwendung einer wie zuvor definierten Instant-Getränkezusammensetzung zur Herstellung eines vorzugsweise nichtkariogenen und/oder kalorienreduzierten Instant-Getränks, insbesondere nichtkariogenen und/oder kalorienreduzierten Instant-Teegetränks.

Diesbezüglich kann es erfindungsgemäß vorgesehen sein, dass die Herstellung des trinkfertigen Instant-Getränks durch Aufbereiten mit einer trinkbaren Flüssigkeit, insbesondere Wasser, erfolgt. Vorzugsweise werden dabei 1 bis 15 g, bevorzugt 2 bis 10 g, besonders bevorzugt 3 bis 9 g, ganz besonders bevorzugt 4 bis 8 g, der Zusammensetzung auf 100 ml Flüssigkeit eingesetzt.

Ein weiterer Aspekt der vorliegenden Erfindung ist zudem ein nichtkariogenes und/oder kalorienreduziertes Instant-Getränk, welches unter Verwendung einer wie zuvor definierten Instant-Getränkezusammensetzung erhältlich ist.

Im Rahmen der vorliegenden Erfindung ist es insgesamt gelungen, durch eine spezielle Kombination von Granulat- und/oder Agglomeratbildnern bzw. Träger- oder Matrixmaterialien eine nichtkariogene und/oder kalorienreduzierte Instant-Getränkezusammensetzung nach der vorliegenden Erfindung bzw. ein nichtkariogenes und/oder kalorienreduziertes Granulat und/oder Agglomerat zum anschließenden Zubereiten eines Instant-Getränks bereitzustellen. Die mit der erfindungsgemäßen Instant-Getränkezusammensetzung hergestellten Getränke können Tee oder teeähnlich sein, wie z. B. Hibiskustee, Fencheltee oder Kamillentee sowie Pfefferminztee. Zudem kann die erfindungsgemäße Instant-Getränkezusammensetzung auch derart ausgestaltet sein, dass damit sozusagen herkömmliche Instant-Getränke, wie Orangengetränk, Zitronengetränk, Grapefruitgetränk und dergleichen, hergestellt werden können.

Die vorliegende Erfindung wird anhand der vorliegenden Ausführungsbeispiele veranschaulicht, welche die vorliegende Erfindung jedoch nicht beschränken.

### Ausführungsbeispiele:

### Beispiel 1: Rezepturbeispiel für eine nichterfindungsgemäße Instant-Getränkezusammensetzung zur Herstellung eines nichtkariogenen und kalorienreduzierten Wildfruchttees

Es wurde eine Ausgangsmischung auf Basis der folgenden Bestandteile bzw. Inhaltsstoffe herstellt:

| | |
|---|---|
| Isomaltulose | 80 - 90 Gewichtsteile |
| Citronensäure | 5 - 10 Gewichtsteile |
| Wildfrüchteextrakt | 1 - 10 Gewichtsteile |
| Aroma | 1 - 5 Gewichtsteile |
| Aspartam | 0,5 - 2 Gewichtsteile |

Die zuvor beschriebene Mischung wurde zunächst unter Zugabe von Wasser auf einen Gesamtfeuchtegehalt von 5 Gew.-% eingestellt und anschließend in einem Granulator verarbeitet, um ein kornförmiges Granulat mit Teilchengrößen im Bereich von 1 bis 2 mm und mit einem Restfeuchtegehalt von 3 bis 4 Gew.-%, bezogen auf das Granulat, herzustellen. Ein Auf- bzw. Einbringen der Einzelkomponenten an bzw. in den Granulatbildner bzw. das Matrix- bzw. Trägermaterial war jedoch kaum möglich. Anstelle von Granulaten mit den gewünschten Eigenschaften resultierte ein instabiles Granulat, welches bereits unter geringer mechanischer Einwirkung (z. B. Rühren in einem Mischer, Abfüllen in einer automatisierten Abfüllanlage oder dergleichen) zu einem feinteiligen pulverförmigen Produkt zerfiel. Weiterhin ließ sich das Erzeugnis nur unter übermäßiger Staubbildung weiterverarbeiten bzw. abfüllen, was auf die Zerstörung des Granulats zurückzuführen ist. Auch das Dosierverhalten bei Herstellung eines Instant-Getränkes ist mit Nachteilen verbunden und führt insbesondere zu einer partiellen Zerstörung des Granulats, zumal das Einbringen bzw. ein homogenes Einrühren bzw. Auflösen in Wasser aufgrund der Bildung starker Verklumpungen kaum möglich war. Im Ergebnis lassen sich unter Verwendung von Isomaltulose als einzigem Granulatbildner keine stabilen und gut handhabbaren Granulate herstellen. Auch die organoleptischen Eigenschaften waren nicht optimal, insbesondere auch aufgrund eines artifiziellen Beigeschmacks bei der Verkostung.

### Beispiel 2: Rezepturbeispiel für eine erfindungsgemäße Instant-Getränkezusammensetzung zur Herstellung eines nichtkariogenen und kalorienreduzierten Wildfruchttees

Es wurde eine Ausgangsmischung auf Basis der folgenden Bestandteile bzw. Inhaltsstoffe herstellt. Gegenüber der Rezeptur gemäß Beispiel 1 wurde ein Teil der Isomaltulose durch den Zuckeralkohol Xylit ersetzt (d. h. mit anderen Worten wird ein Granulatbildner auf Basis einer Kombination von Isomaltulose / Zuckeralkohol (Xylit) eingesetzt). Zudem konnte aufgrund dieser Kombination auf eine zusätzliche Süßstoffkomponente (Aspartam) verzichtet werden:

| | |
|---|---|
| Isomaltulose | 60 - 75 Gewichtsteile |
| Xylit | 15 - 25 Gewichtsteile |
| Citronensäure | 5 - 10 Gewichtsteile |
| Wildfrüchteextrakt | 1 - 10 Gewichtsteile |
| Aroma | 1 - 5 Gewichtsteile |

Bei der Herstellung des Granulats wird entsprechend dem vorangehenden Beispiel verfahren.

Im Anschluss an die Herstellung wurde die Instant-Getränkezusammensetzung bzw. das Granulat auf Stabilität, Handhabung, insbesondere im Hinblick auf Dosierbarkeit und Staubbildung, sowie Löslichkeitsverhalten untersucht:

Die erfindungsgemäße Instant-Getränkezusammensetzung neigte aufgrund der Ausbildung stabiler Granulate mit definierten Teilchengrößen und -formen nicht zur Bildung von Staub, was sowohl die Handhabung bei der Herstellung und Abfüllung als auch die Anwendung durch den Endverbraucher verbessert.

Was die Langzeitstabilität (Haltbarkeit) und Lagerstabilität der erfindungsgemäßen Zusammensetzung anbelangt, so ist diese auch über einen Zeitraum von mehreren Monaten gewährleistet, wie die Versuche der Anmelderin gezeigt haben. Insbesondere ist das erfindungsgemäße Granulat aufgrund der verbesserten Stabilität der Granulatmatrix bzw. des Granulatgerüsts infolge der Verwendung einer Kombination von Isomaltulose und Zuckeralkohol (Xylit) unter mechanischer Einwirkung stabil, insbesondere bei Einwirkung von Scherkräften (z. B. Rühren in Mischern zu Zwecken der Homogenisierung etc.), bei der Abfüllung des Granulats in handelsübliche Verpackungseinheiten in automatisierten Abfüllanlagen oder dergleichen.

Zur Untersuchung von Dosierbarkeit und Lösungsverhalten wurde das Granulat der erfindungsgemäßen Instant-Getränkezusammensetzung mit heißem oder kaltem Wasser aufgegossen, so dass ein nichtkariogenes und kalorienreduziertes süßes Teegetränk resultierte. Das Granulat löste sich innerhalb kürzester Zeit ohne die Bildung von Verklumpungen auf und bildete in Wasser eine stabile Lösung bzw. Suspension.

Was die organoleptischen Eigenschaften und Dosierbarkeit anbelangt, so sind diese optimal, da eine ausreichende, aber als natürlich empfundene Süße resultiert, insbesondere ohne einen künstlichen bzw. bitteren Beigeschmack, wie er insbesondere bei der übermäßigen Verwendung von Süßstoffen auftreten kann. Aufgrund der zusätzlichen Verwendung des Zuckeralkohols auf Basis von Xylit wurde gegenüber einer Zusammensetzung ausschließlich auf Basis von Isomaltulose als alleinigem Granulatbildner also ein deutlich verbesserter Süßegrad bzw. Süßegeschmack erreicht, wobei das Geschmacksbild mit dem von saccharosebasierten Zusammensetzungen vergleichbar ist. In diesem Zusammenhang kann folglich auf den Einsatz einer Süßstoffkomponente verzichtet werden.

Zudem führt das Getränk auf Basis der erfindungsgemäßen Zusammensetzung im Vergleich zu herkömmlichen Instant-Getränkezusammensetzungen sowohl zu einer deutlich verringerten Kariogenität, da weder Isomaltulose noch Xylit von kariogenen Bakterien verstoffwechselt werden, als auch zu einem deutlich reduzierten Brennwert bzw. zu einer von Insulin unabhängigen Metabolisierung, da zur Herstellung des Granulats keine Saccharose eingesetzt wurde.

Es versteht sich von selbst, dass nicht nur Teegetränke auf Basis von Wildfrüchte-Extrakten hergestellt werden können, sondern auch solche auf Basis von weiteren Pflanzen-, Frucht- und Kräuterextrakten, wie z. B. Schwarztee-Extrakt, Grüntee-Extrakt, Hibiskus-Extrakt, Rotbusch-Extrakt etc.

Das erfindungsgemäße Beispiel wurde jeweils mit anderen Zuckeralkoholen (nämlich Erythrit, Mannit, Sorbit, Isomaltit und Maltit) anstelle von Xylit wiederholt, wobei diesbezüglich vergleichbare Ergebnisse erhalten wurden.

Im Ergebnis lassen sich unter Verwendung einer Kombination von Isomaltulose einerseits und Zuckeralkohol andererseits als Granulatbildner stabile und gut handhabbare Granulate herstellen. Auch die organoleptischen Eigenschaften sind optimiert.

## Patentansprüche

1. Instant-Getränkezusammensetzung, insbesondere zur Herstellung eines vorzugsweise nichtkariogenen und/oder kalorienreduzierten Instant-Getränks durch Aufbereiten mit einer trinkbaren Flüssigkeit,
wobei die Zusammensetzung zumindest im Wesentlichen frei von Saccharose ist und wobei die Zusammensetzung in Form eines Granulats und/oder Agglomerats, insbesondere Granulats, vorliegt,
wobei die Zusammensetzung
(a) als Granulat- und/oder Agglomeratbildner eine Kombination von Isomaltulose mit mindestens einem Zuckeraustauschstoff und/oder mit mindestens einem von Saccharose verschiedenen Zucker in einem Verhältnis [Isomaltulose : Zuckeraustauschstoff] und/oder [Isomaltulose : von Saccharose verschiedener Zucker] im Bereich von 10 : 1 bis 3 : 1 und in einer Menge von 30 bis 96 Gew.-%, bezogen auf die Zusammensetzung, und
(b) mindestens einen Aroma- und/oder Geschmacksbildner
enthält,
wobei das Granulat und/oder Agglomerat eine diskrete Teilchengrößenverteilung aufweist, wobei mindestens 90 % der Partikel eine Teilchengröße von 0,1 bis 10 mm aufweisen,
wobei die Zusammensetzung, bezogen auf die Zusammensetzung, eine Gesamtrestfeuchte von 0,3 bis 8 Gew.-% aufweist und
wobei die Partikel des Granulats und/oder Agglomerats eine Druckfestigkeit, berechnet als Gewichtsbelastbarkeit pro Partikel, von mindestens 0,01 N aufweisen.

2. Zusammensetzung nach Anspruch 1,
wobei die Zusammensetzung den (a) Granulat- und/oder Agglomeratbildner in einer Menge von 50 bis 95 Gew.-%, bezogen auf die Zusammensetzung und/oder das Granulat und/oder Agglomerat, enthält; und/oder
wobei die Zusammensetzung die Isomaltulose in einer Menge von 30 bis 92 Gew.-%, bevorzugt 40 bis 90 Gew.-%, bezogen auf die Zusammensetzung und/oder das Granulat und/oder Agglomerat, enthält.

3. Zusammensetzung nach Anspruch 1 oder 2, wobei die Zusammensetzung den Zuckeraustauschstoff einerseits und den von Saccharose verschiedenen Zucker andererseits in einem Verhältnis [Zuckeraustauschstoff : von Saccharose verschiedener Zucker] im Bereich von 100 : 1 bis 1 : 70, insbesondere 60: 1 bis 1 : 30, vorzugsweise 40 : 1 bis 1 : 10, bevorzugt 20 : 1 bis 1 : 1, ganz besonders bevorzugt 10 : 1 bis 2 : 1, enthält.

4. Zusammensetzung nach einem der vorangehenden Ansprüche, wobei die Zusammensetzung den von Saccharose verschiedenen Zucker und/oder den Zuckeraustauschstoff in einer Menge von 1 bis 70 Gew.-%, insbesondere 2 bis 70 Gew.-%, vorzugsweise 5 bis 70 Gew.-%, bezogen auf die Zusammensetzung und/oder das Granulat und/oder Agglomerat, enthält.

5. Zusammensetzung nach einem der vorangehenden Ansprüche,
wobei die Zusammensetzung den mindestens einen Zuckeraustauschstoff in einer Menge von 2 bis 60 Gew.-%, insbesondere 5 bis 60 Gew.-%, vorzugsweise 10 bis 60 Gew.-%, bezogen auf die Zusammensetzung und/oder das Granulat und/oder Agglomerat, enthält; und/oder
wobei der Zuckeraustauschstoff ausgewählt ist aus der Gruppe von Zuckeralkoholen, insbesondere Erythrit, Mannit, Xylit, Sorbit, Isomaltit, Maltit, Lactit, Galactit und deren Mischungen, bevorzugt Erythrit, Mannit, Xylit, Isomaltit und deren Mischungen, ganz besonders bevorzugt Xylit.

6. Zusammensetzung nach einem der vorangehenden Ansprüche,
wobei die Zusammensetzung den mindestens einen von Saccharose verschiedenen Zucker in einer Menge von 1 bis 50 Gew.-%, insbesondere 2 bis 50 Gew.-%, vorzugsweise 3 bis 50 Gew.-%, besonders bevorzugt 5 bis 50 Gew.-%, bezogen auf die Zusammensetzung und/oder das Granulat und/oder Agglomerat, enthält; und/oder wobei der von Saccharose verschiedene Zucker ausgewählt ist aus der Gruppe von Mannose, Maltose, Lactose, Glucose (Dextrose), Fructose, Xylose, Maltodextrin und deren Mischungen.

7. Zusammensetzung nach einem der vorangehenden Ansprüche,
wobei die Zusammensetzung (b) den mindestens einen Aroma- und/oder Geschmacksbildner in einer Menge von 0,1 bis 75 Gew.-%, insbesondere 0,5 bis 60 Gew.-%, besonders bevorzugt 1 bis 50 Gew.-%, ganz besonders bevorzugt 2 bis 25 Gew.-%, bezogen auf die Zusammensetzung und/oder das Granulat und/oder Agglomerat, enthält; und/oder
wobei (b) der mindestens eine Aroma- und/oder Geschmacksbildner ausgewählt ist aus der Gruppe von Extrakten, insbesondere Pflanzenextrakten, Fruchtextrakten, Kräuterextrakten, Teeextrakten und deren Mischungen, vorzugsweise in einer Menge von 0,1 bis 10 Gew.-%, bevorzugt 0,25 bis 8 Gew.-%, besonders bevorzugt 0,5 bis 6 Gew.-%, ganz besonders bevorzugt 1 bis 5 Gew.-%, bezogen auf die Zusammensetzung und/oder das Granulat und/oder Agglomerat; und/oder
wobei (b) der Aroma- und/oder Geschmacksbildner ausgewählt ist aus künstlichen, naturidentischen und/oder natürlichen Aromen und/oder Aromastoffen, vorzugsweise in einer Menge von 0,01 bis 10 Gew.-%, bevorzugt 0,1 bis 8 Gew.-%, besonders bevorzugt 0,3 bis 5 Gew.-%, ganz besonders bevorzugt 0,5 bis 3 Gew.-%, bezogen auf die Zusammensetzung und/oder das Granulat und/oder Agglomerat.

8. Zusammensetzung nach einem der vorangehenden Ansprüche,
wobei (b) der Aroma- und/oder Geschmacksbildner ausgewählt ist aus Pflanzenpulvern, Fruchtpulvern und/oder Saftpulvern, vorzugsweise in einer Menge von 0,01 bis 8 Gew.-%, bevorzugt 0,05 bis 6 Gew.-%, besonders bevorzugt 0,1 bis 4 Gew.-%, ganz besonders bevorzugt 0,15 bis 3 Gew.-%, bezogen auf die Zusammensetzung und/oder das Granulat und/oder Agglomerat; und/oder
wobei die Zusammensetzung Säuerungsmittel, insbesondere aus der Gruppe von Genusssäuren, vorzugsweise Citronensäure, Weinsäure und Äpfelsäure, enthält, vorzugsweise in einer Menge von 0,01 bis 5 Gew.-%, bevorzugt 0,1 bis 4 Gew.-%, ganz besonders bevorzugt 0,5 bis 2 Gew.-%, bezogen auf die Zusammensetzung und/oder das Granulat und/oder Agglomerat.

9. Zusammensetzung nach einem der vorangehenden Ansprüche,
wobei die Zusammensetzung Farbstoffe, insbesondere natürliche und/oder naturidentische Farbstoffe, enthält, vorzugsweise in einer Menge von 0,01 bis 5 Gew.-%, bevorzugt 0,1 bis 4 Gew.-%, ganz besonders bevorzugt 0,5 bis 3 Gew.-%, bezogen auf die Zusammensetzung und/oder das Granulat und/oder Agglomerat; und/oder
wobei die Zusammensetzung Saccharose in einer Menge von höchstens 5 Gew.-%, insbesondere höchstens 2 Gew.-%, vorzugsweise höchstens 1 Gew.-%, besonders bevorzugt höchstens 0,5 Gew.-%, ganz besonders bevorzugt jedoch 0 Gew.-%, bezogen auf die Zusammensetzung und/oder das Granulat und/oder Agglomerat, enthält.

10. Zusammensetzung nach einem der vorangehenden Ansprüche, wobei die Zusammensetzung in Form eines kornförmigen und/oder zumindest im Wesentlichen kugelförmigen, insbesondere kornförmigen, Granulats und/oder Agglomerats vorliegt und/oder wobei die Teilchen und/oder Partikel der Zusammensetzung, insbesondere des Granulats und/oder Agglomerats, eine Druck- bzw. Berstfestigkeit, d.h. eine Gewichtsbelastbarkeit pro Teilchen bzw. Partikel, von mindestens 0,05 N, vorzugsweise mindestens 0,1 N, bevorzugt mindestens 0,5 N, besonders bevorzugt mindestens 1 N, aufweisen und/oder wobei die Teilchen und/oder Partikel der Zusammensetzung, insbesondere des Granulats und/oder Agglomerats, eine Druck- bzw. Berstfestigkeit, d.h. eine Gewichtsbelastbarkeit pro Teilchen bzw. Partikel, im Bereich von 0,01 N bis 10 N, insbesondere 0,05 N bis 5 N, vorzugsweise 0,1 N bis 3 N, bevorzugt 0,2 N bis 2,5 N, besonders bevorzugt 0,5 N bis 2 N, aufweisen.

11. Zusammensetzung nach einem der vorangehenden Ansprüche,
wobei die Teilchengröße der Partikel, d.h. die Partikelgröße der Zusammensetzung, insbesondere des Granulats und/oder Agglomerats, 0,1 bis 10 mm, insbesondere 0,2 bis 8 mm, vorzugsweise 0,5 bis 6 mm, besonders bevorzugt 0,7 bis 4 mm, ganz besonders bevorzugt 0,8 bis 3 mm, beträgt; und/oder
wobei die mittlere Teilchengröße, d.h. die mittlere Partikelgröße, insbesondere die mittlere Teilchengröße D₅₀, der Partikel der Zusammensetzung, insbesondere des Granulats und/oder Agglomerats, 0,2 bis 8 mm, insbesondere 0,3 bis 6 mm, vorzugsweise 0,8 bis 4,5 mm, besonders bevorzugt 0,9 bis 4 mm, ganz besonders bevorzugt 1 bis 2 mm, beträgt.

12. Zusammensetzung nach einem der vorangehenden Ansprüche,
wobei mindestens 92 % der Partikel eine Partikelgröße von 0,2 bis 8 mm, vorzugsweise mindestens 95 % der Partikel eine Partikelgröße von 0,5 bis 6 mm, besonders bevorzugt mindestens 97 % der Partikel eine Partikelgröße von 0,7 bis 4 mm, ganz besonders bevorzugt mindestens 99 % der Partikel eine Partikelgröße von 0,8 bis 3 mm, aufweisen; und/oder
wobei die Zusammensetzung, insbesondere das Granulat und/oder Agglomerat, eine Schüttdichte von 100 bis 800 g/l, insbesondere 150 bis 700 g/l, vorzugsweise 200 bis 600 g/l, bevorzugt 300 bis 500 g/l, besonders bevorzugt 350 bis 450 g/l, aufweist; und/oder
wobei die Zusammensetzung, insbesondere das Granulat und/oder Agglomerat, bezogen auf die Zusammensetzung, insbesondere das Granulat und/oder Agglomerat, eine Gesamtrestfeuchte von 0,8 bis 6 Gew.-%, bevorzugt 1 bis 5 Gew.-%, besonders bevorzugt 2 bis 4 Gew.-%, aufweist; und/oder
wobei die Zusammensetzung in Wasser zumindest im Wesentlichen, insbesondere vollständig, löslich ist.

13. Verfahren zur Herstellung einer Instant-Getränkezusammensetzung, insbesondere zur Herstellung eines vorzugsweise nichtkariogenen und/oder kalorienreduzierten Instant-Getränks durch Aufbereiten mit einer trinkbaren Flüssigkeit, in Form eines Granulats und/oder Agglomerats, insbesondere wie in einem der vorangehenden Ansprüche definiert, wobei das Verfahren die folgenden Verfahrensschritte umfasst:
a) Herstellung einer Mischung, welche (a) mindestens einen Granulat- und/oder Agglomeratbildner auf Basis einer Kombination von Isomaltulose mit mindestens einem von Saccharose verschiedenen Zucker und/oder mit mindestens einem Zuckeraustauschstoff und (b) mindestens einen Aroma- und/oder Geschmacksbildner enthält, wobei die Isomaltulose und der mindestens eine von Saccharose verschiedene Zucker und/oder der mindestens eine Zuckeraustauschstoff in einem Verhältnis [Isomaltulose : Zuckeraustauschstoff] und/oder [Isomaltulose : Zuckeraustauschstoff] im Bereich von 10 : 1 bis 3 : 1 eingesetzt werden;
b) nachfolgende Herstellung eines Granulats und/oder Agglomerats aus der in Schritt a) hergestellten Mischung durch Trocknung unter Einstellung einer diskreten Teilchengrößenverteilung, wobei mindestens 90 % der Partikel eine Teilchengröße von 0,1 bis 10 mm aufweisen, einer Druckfestigkeit, berechnet als Gewichtsbelastbarkeit pro Partikel, von mindestens 0,01 N und einer Gesamtrestfeuchte von 0,3 bis 8 Gew.-%, bezogen auf die Zusammensetzung.

14. Instant-Getränkezusammensetzung, insbesondere nach einem der Ansprüche 1 bis 12, insbesondere zur Herstellung eines vorzugsweise nichtkariogenen und/oder kalorienreduzierten Instant-Getränks durch Aufbereiten mit einer trinkbaren Flüssigkeit, insbesondere Wasser, erhältlich durch ein Verfahren nach Anspruch 13.

15. Verwendung einer Instant-Getränkezusammensetzung nach einem der Ansprüche 1 bis 12 zur Herstellung eines vorzugsweise nichtkariogenen und/oder kalorienreduzierten Instant-Getränks, insbesondere nichtkariogenen und/oder kalorienreduzierten Instant-Teegetränks.

## Claims

1. An instant beverage composition, in particular for the production of a preferably cariogenic and/or calorie-reduced instant beverage by means of treating the same with a drinkable liquid,
wherein the composition is at least essentially free of saccharose, and wherein the composition is present in the form of a granulate and/or agglomerate, in particular a granulate,
wherein the composition comprises
(a) a combination of isomaltulose with at least one sugar substitute, and/or at least one sugar that is different from saccharose, as the granulate and/or agglomerate creator, at a ratio [isomaltuloseaugar substitute] and/or [isomaltulose:sugar different from saccharose] in the range of 10:1 to 3:1, and at an amount of 30 to 96% by weight, based on the composition, and
(b) at least one flavor and/or taste creator,
wherein the granulate and/or agglomerate has a discrete particle size distribution, wherein at least 90% of the particles have a particle size of 0.1 to 10 mm,
wherein the composition, based on the composition, has a total residual moisture of 0.3 to 8% by weight, and
wherein the particles of the granulate and/or agglomerate have a crush resistance, as calculated as the weight load capacity per particle, of at least 0.01 N.

2. The composition according to claim 1,
wherein the composition contains (a) the granulate and/or agglomerate creator at an amount of 50 to 95 % by weight, based on the composition and/or the granulate and/or agglomerate; and/or
wherein the composition contains comprises the isomaltulose at an amount of 30 to 92% by weight, preferably 40 to 90% by weight, based on the composition and/or the granulate and/or agglomerate.

3. The composition according to claims 1 or 2, wherein the composition comprises both the sugar substitute and the sugar that is different from saccharose at a ratio [sugar substitute:sugar different from saccharose] in the range of 100:1 to 1:70, in particular 60:1 to 1:30, preferably 40:1 to 1:10, preferably 20:1 to 1:1, particularly preferred 10:1 to 2:1.

4. The composition according to one of the previous claims, wherein the composition comprises the sugar substitute and the sugar that is different from saccharose at an amount of 1 to 70% by weight, in particular 2 to 70% by weight, preferably 5 to 70% by weight, based on the composition and/or the granulate and/or agglomerate.

5. The composition according to one of the previous claims,
wherein the composition comprises the at least one sugar substitute at an amount of 2 to 60% by weight, in particular 5 to 60% by weight, preferably 10 to 60% by weight, based on the composition and/or the granulate and/or agglomerate; and/or
wherein the sugar substitute is selected from the group of sugar alcohols, in particular erythrite, mannite, xylite, sorbite, isomaltite, maltase, lactate, galactite, and the mixtures thereof, preferably erythrite mannite, xylite, isomaltite, and the mixture thereof, most particularly preferred xylite.

6. The composition according to one of the previous claims,
wherein the composition comprises the at least one sugar that is different from saccharose at an amount of 1 to 50% by weight, in particular 2 to 50% by weight, preferably 3 to 50% by weight, particularly preferred 5 to 50% by weight, based on the composition and/or the granulate and/or agglomerate; and/or
wherein the sugar that is different from saccharose is selected from the group of mannose, maltose, lactose, glucose (dextrose), fructose, xylose, maltodextrin, and the mixtures thereof.

7. The composition according to one of the previous claims,
wherein the composition comprises (b) the at least one flavor and/or taste creator at an amount of 0.1 to 75% by weight, in particular 0.5 to 60% by weight, particularly preferred 1 to 50% by weight, most particularly preferred 2 to 25% by weight, based on the composition and/or the granulate and/or agglomerate; and/or
wherein (b) the at least one flavor and/or taste creator is selected from the group of extracts, in particular plant extracts, fruit extracts, herb extracts, tea extracts, and the mixtures thereof, preferably at an amount of 0.1 to 10% by weight, preferably 0.25 to 8% by weight, particularly preferred 0.5 to 6% by weight, most particularly preferred 1 to 5% by weight, based on the composition and/or the granulate and/or agglomerate; and/or
wherein (b) the flavor and/or taste creator is selected from artificial, nature-identical, and/or natural flavors and/or flavoring agents, preferably at an amount of 0.01 to 10% by weight, preferably 0.1 to 8% by weight, particularly preferred 0.3 to 5% by weight, most particularly preferred 0.5 to 3% by weight, based on the composition and/or the granulate and/or agglomerate.

8. The composition according to one of the previous claims,
wherein (b) the flavor and/or taste creator is selected from plant powders, fruit powders, and/or juice powders, preferably at an amount of 0.01 to 8% by weight, more preferably 0.05 to 6% by weight, particularly preferred 0.1 to 4% by weight, most particularly preferred 0.15 to 3% by weight, based on the composition and/or the granulate and/or agglomerate; and/or
wherein the composition comprises acidifiers, in particular from the group of food-grade acids, preferably citric acid, tartaric acid, and malic acid, preferably at an amount of 0.01 to 5% by weight, preferably 0.1 to 4% by weight, most particularly preferred 0.5 to 2% by weight, based on the composition and/or the granulate and/or agglomerate.

9. The composition according to one of the previous claims,
wherein the composition comprises dyes, in particular natural and/or nature-identical dyes, preferably at an amount of 0.01 to 5% by weight, more preferably 0.1 to 4% by weight, most particularly preferred 0.5 to 3% by weight, based on the composition and/or the granulate and/or agglomerate; and/or
wherein the composition comprises saccharose at an amount of not more than 5% by weight, in particular not more than 2% by weight, preferably not more than 1% by weight, particularly preferred not more than 0.5% by weight, most particularly preferred, however, 0% by weight, based on the composition and/or the granulate and/or agglomerate.

10. The composition according to one of the previous claims, wherein the composition is present in the form of a granular and/or at least essentially spherical, in particular granular granulate and/or agglomerate, and/or wherein the particulates and/or particles of the composition, in particular of the granulate and/or agglomerate, comprise a pressure or bursting strength, i.e. a weight load capacity per particulate or particle, of at least 0.05 N, preferably at least 0.1 N, more preferably at least 0.5 N, particularly preferred at least 1 N, and/or wherein the particulates and/or particles of the composition, in particular of the granulate and/or agglomerate, comprise a pressure or bursting strength, i.e. a weight load capacity per particulate or particle in the range of 0.01 N to 10 N, in particular 0.05 N to 5 N, preferably 0.1 N to 3 N, more preferably 0.2 N to 2.5 N, particularly preferred 0.5 N to 2 N.

11. The composition according to one of the previous claims,
wherein the particulate size of the particles, i.e. the particle size, of the composition, in particular of the granulate and/or agglomerate, is 0.1 to 10 mm, in particular 0.2 to 8 mm, preferably 0.5 to 6 mm, particularly preferred 0.7 to 4 mm, most particularly preferred 0.8 to 3 mm; and/or
wherein the mean particulate size, i.e. the mean particle size, in particular the mean particulate size D₅₀ of the particles of the composition, in particular of the granulate and/or agglomerate, is 0.2 to 8 mm, in particular 0.3 to 6 mm, preferably 0.8 to 4.5 mm, particularly preferred 0.9 to 4 mm, most particularly preferred 1 to 2 mm.

12. The composition according to one of the previous claims,
wherein at least 92% of the particles have a particle size of 0.2 to 8 mm, preferably at least 95% of the particles have a particle size of 0.5 to 6 mm, particularly preferred at least 97% of the particles have a particle size of 0.7 to 4 mm, most particularly preferred at least 99% of the particles have a particle size of 0.8 to 3 mm; and/or
wherein the composition, in particular the granulate and/or agglomerate, comprises a bulk density of 100 to 800 g/l, in particular 150 to 700 g/l, preferably 200 to 600 g/l, more preferably 300 to 500 g/l, particularly preferred 350 to 450 g/l; and/or
wherein the composition, in particular the granulate and/or agglomerate, based on the composition, in particular the granulate and/or agglomerate, comprises a total residual moisture of 0.8 to 6% by weight, preferably 1 to 5% by weight, particularly preferred 2 to 4% by weight; and/or
wherein the composition is at least essentially, in particular completely, soluble in water.

13. A method for the production of an instant beverage composition, in particular for the production of a preferably non-cariogenic and/or calorie-reduced instant beverage by means of treating the same with a drinkable liquid, in the form of a granulate and/or agglomerate, in particular as defined in one of the previous claims, the method comprising the following process steps:
a) production of a mixture, comprising (a) at least one granulate and/or agglomerate creator based on a combination of isomaltulose with at least one sugar that is different from saccharose, and/or comprising at least one sugar substitute, and (b) at least one flavor and/or taste creator, wherein the isomaltulose and the at least one sugar that is different from saccharose, and/or the at least one sugar substitute is used at a ratio [isomaltulose:sugar substitute] and/or [isomaltulose:sugar substitute] in the range of 10:1 to 3:1;
b) subsequent production of a granulate and/or agglomerate from the mixture produced in step a) by means of drying with the adjustment of a discrete particle size distribution, wherein at least 90% of the particles have a particulate size of 0.1 to 10 mm, a pressure strength, calculated as the weight load capacity per particle, of at least 0.01 N, and a total residual moisture of 0.3 to 8% by weight, based on the composition.

14. The instant beverage composition, in particular according to one of the claims 1 to 12, in particular for the production of a preferably non-cariogenic and/or calorie-reduced instant beverage by means of treating the same with a drinkable liquid, in particular water, obtainable by means of a method according to claim 13.

15. A use of an instant beverage composition according to one of the claims 1 to 12 for the production of a preferably non-cariogenic and/or calorie-reduced instant beverage, in particular non-cariogenic and/or calorie-reduced instant tea beverage.

## Revendications

1. Composition pour boisson instantanée, en particulier pour la préparation d'une boisson instantanée de préférence non cariogène et/ou hypocalorique, par préparation d'une boisson buvable,
la composition étant au moins pour l'essentiel exempte de saccharose, et la composition se présentant sous forme d'un granulé et/ou d'un aggloméré, en particulier d'un granulé,
la composition contenant
(a) en tant que générateur de granulés et/ou d'agglomérés une combinaison d'isomaltulose et d'au moins un succédané du sucre et/ou au moins un sucre différent du saccharose, selon un rapport [isomaltulose : succédané du sucre] et/ou [isomaltulose : sucre différent du saccharose] compris dans la plage de 10:1 à 3:1, et en une quantité de 30 à 96 % en poids par rapport à la composition, et
(b) au moins un aromatisant et/ou un agent de sapidité,
le granulé et/ou l'aggloméré présentant une distribution granulométrique discrète, pour laquelle au moins 90 % des particules ont une granulométrie de 0,1 à 10 mm,
la composition présentant une humidité résiduelle totale de 0,3 à 8 % en poids par rapport à la composition, et
les particules du granulé et/ou de l'aggloméré présentant une résistance à la compression, calculée par la charge admissible par particule, d'au moins 0,01 N.

2. Composition selon la revendication 1,
la composition contenant (a) le générateur de granulés et/ou d'agglomérés en une quantité de 50 à 95 % en poids par rapport à la composition et/ou au granulé et/ou à l'aggloméré ; et/ou
la composition contenant l'isomaltulose en une quantité de 30 à 92 % en poids, de préférence de 40 à 90 % en poids, par rapport à la composition et/ou au granulé et/ou à l'aggloméré.

3. Composition selon la revendication 1 ou 2, la composition contenant le succédané du sucre d'une part, et le sucre différent du saccharose d'autre part, selon un rapport [succédané du sucre : sucre différent du saccharose] compris dans la plage de 100:1 à 1:70, en particulier de 60:1 à 1:30, de préférence de 40:1 à 1:10, préférentiellement de 20:1 à 1:1, d'une manière tout particulièrement préférée de 10:1 à 2:1.

4. Composition selon l'une des revendications précédentes, la composition contenant le sucre différent du saccharose et/ou le succédané du sucre en une quantité de 1 à 70 % en poids, en particulier de 2 à 70 % en poids, de préférence de 5 à 70 % en poids, par rapport à la composition et/ou au granulé et/ou à l'aggloméré.

5. Composition selon l'une des revendications précédentes,
la composition contenant le ou les succédanés du sucre en une quantité de 2 à 60 % en poids, en particulier de 5 à 60 % en poids, de préférence de 10 à 60 % en poids, par rapport à la composition et/ou au granulé et/ou à l'aggloméré ; et/ou
dans laquelle le succédané du sucre est choisi dans le groupe des alcools de sucre, en particulier l'érythritol, le mannitol, le xylitol, le sorbitol, l'isomaltitol, le maltitol, le lactitol, le galactitol et les mélanges de ceux-ci, préférentiellement l'érythritol, le mannitol, le xylitol, l'isomaltitol et les mélanges de ceux-ci, d'une manière tout particulièrement préférée le xylitol.

6. Composition selon l'une des revendications précédentes,
la composition contenant le ou les sucres différents du saccharose en une quantité de 1 à 50 % en poids, en particulier de 2 à 50 % en poids, de préférence de 3 à 50 % en poids, d'une manière particulièrement préférée de 5 à 50 % en poids, par rapport à la composition et/ou au granulé et/ou à l'aggloméré ; et/ou
dans laquelle le sucre différent du saccharose est choisi dans le groupe du mannose, du maltose, du lactose, du glucose (dextrose), du fructose, du xylose, de la maltodextrine et des mélanges de ceux-ci.

7. Composition selon l'une des revendications précédentes,
la composition contenant (b) le ou les aromatisants et/ou agents de sapidité en une quantité de 0,1 à 75 % en poids, en particulier de 0,5 à 60 % en poids, d'une manière particulièrement préférée de 1 à 50 % en poids, d'une manière tout particulièrement préférée de 2 à 25 % en poids, par rapport à la composition et/ou au granulé et/ou à l'aggloméré ; et/ou
dans laquelle (b) le ou les aromatisants et/ou agents de sapidité sont choisis dans le groupe des extraits, en particulier des extraits de plantes, des extraits de fruits, des extraits d'herbes aromatiques, des extraits de thé et des mélanges de ceux-ci, de préférence en une quantité de 0,1 à 10 % en poids, de préférence de 0,25 à 8 % en poids, d'une manière particulièrement préférée de 0,5 à 6 % en poids, d'une manière tout particulièrement préférée de 1 à 5 % en poids, par rapport à la composition et/ou au granulé et/ou à l'aggloméré ; et/ou
dans laquelle (b) l'aromatisant et/ou l'agent de sapidité sont choisis parmi les arômes et/ou substances aromatisantes artificiels, identiques au naturel et/ou naturels, de préférence en une quantité de 0,01 à 10 % en poids, de préférence de 0,1 à 8 % en poids, d'une manière particulièrement préférée de 0,3 à 5 % en poids, d'une manière tout particulièrement préférée de 0,5 à 3 % en poids, par rapport à la composition et/ou au granulé et/ou à l'aggloméré.

8. Composition selon l'une des revendications précédentes,
dans laquelle (b) l'aromatisant et/ou l'agent de sapidité sont choisis parmi les poudres végétales, les poudres de fruits et/ou les poudres de jus, de préférence en une quantité de 0,01 à 8 % en poids, de préférence de 0,05 à 6 % en poids, d'une manière particulièrement préférée de 0,1 à 4 % en poids, d'une manière tout particulièrement préférée de 0,15 à 3 % en poids, par rapport à la composition et/ou au granulé et/ou à l'aggloméré ; et/ou
la composition contenant des acidifiants, en particulier du groupe des acides alimentaires, de préférence l'acide citrique, l'acide tartrique et l'acide malique, de préférence en une quantité de 0,01 à 5 % en poids, préférentiellement de 0,1 à 4 % en poids, d'une manière tout particulièrement préférée de 0,5 à 2 % en poids, par rapport à la composition et/ou au granulé et/ou à l'aggloméré.

9. Composition selon l'une des revendications précédentes, la composition contenant des substances colorantes, en particulier des substances colorantes naturelles et/ou identiques au naturel, de préférence en une quantité de 0,01 à 5 % en poids, préférentiellement de 0,1 à 4 % en poids, d'une manière tout particulièrement préférée de 0,5 à 3 % en poids, par rapport à la composition et/ou au granulé et/ou à l'aggloméré ; et/ou
la composition contenant du saccharose en une quantité d'au plus 5 % en poids, en particulier d'au plus 2 % en poids, de préférence d'au plus 1 % en poids, d'une manière particulièrement préférée d'au plus 0,5 % en poids, d'une manière tout particulièrement préférée cependant de 0 % en poids, par rapport à la composition et/ou au granulé et/ou à l'aggloméré.

10. Composition selon l'une des revendications précédentes, la composition se présentant sous forme d'un granulé et/ou d'un aggloméré granulaire et/ou au moins pour l'essentiel sphérique, en particulier granulaire, et/ou dans lequel les grains et/ou particules de la composition, en particulier du granulé et/ou de l'aggloméré, présentent une résistance à la compression ou à l'éclatement, c'est-à-dire une charge admissible par grain ou particule, d'au moins 0,05 N, de préférence d'au moins 0,1 N, préférentiellement d'au moins 0,5 N, d'une manière particulièrement préférée d'au moins 1 N, et/ou dans laquelle les grains ou particules de la composition, en particulier du granulé et/ou de l'aggloméré, présentent une résistance à la compression ou à l'éclatement, c'est-à-dire une charge admissible par grain et/ou particule, dans la plage de 0,01 N à 10 N, en particulier de 0,05 N à 5 N, de préférence de 0,1 N à 3 N, préférentiellement de 0,2 N à 2,5 N, d'une manière particulièrement préférée de 0,5 N à 2 N.

11. Composition selon l'une des revendications précédentes,
dans laquelle la granulométrie des particules, c'est-à-dire la grosseur des particules, de la composition, en particulier du granulé et/ou de l'aggloméré, est de 0,1 à 10 mm, en particulier de 0,2 à 8 mm, de préférence de 0,5 à 6 mm, d'une manière particulièrement préférée de 0,7 à 4 mm, d'une manière tout particulièrement préférée de 0,8 à 3 mm ; et/ou
dans laquelle la granulométrie moyenne, c'est-à-dire la grosseur moyenne des particules, en particulier la granulométrie moyenne D₅₀ des particules de la composition, en particulier du granulé et/ou de l'aggloméré, est de 0,2 à 8 mm, en particulier de 0,3 à 6 mm, de préférence de 0,8 à 4,5 mm, d'une manière particulièrement préférée de 0,9 à 4 mm, d'une manière tout particulièrement préférée de 1 à 2 mm.

12. Composition selon l'une des revendications précédentes,
dans laquelle au moins 92 % des particules ont une granulométrie de 0,2 à 8 mm, de préférence au moins 95 % des particules ont une granulométrie de 0,5 à 6 mm, d'une manière particulièrement préférée au moins 97 % des particules ont une granulométrie de 0,7 à 4 mm, d'une manière tout particulièrement préférée au moins 99 % des particules ont une granulométrie de 0,8 à 3 mm ; et/ou
la composition, en particulier le granulé et/ou l'aggloméré, présentant une masse volumique apparente de 100 à 800 g/l, en particulier de 150 à 700 g/l, de préférence de 200 à 600 g/l, préférentiellement de 300 à 500 g/l, d'une manière particulièrement préférée de 350 à 450 g/l ; et/ou
la composition, en particulier le granulé et/ou l'aggloméré, présentant par rapport à la composition, en particulier au granulé et/ou à l'aggloméré, une humidité résiduelle totale de 0,8 à 6 % en poids, préférentiellement de 1 à 5 % en poids, d'une manière particulièrement préférée de 2 à 4 % en poids ; et/ou
la composition étant au moins pour l'essentiel, en particulier complètement, soluble dans l'eau.

13. Procédé de préparation d'une composition pour boisson instantanée, en particulier pour la préparation d'une boisson instantanée de préférence non cariogène et/ou hypocalorique, par préparation avec un liquide buvable, sous forme d'un granulé et/ou d'un aggloméré, en particulier telle que définie dans l'une des revendications précédentes, le procédé comprenant les étapes suivantes :
a) préparation d'un mélange qui contient (a) au moins un générateur de granulés et/ou d'agglomérés à base d'une combinaison d'isomaltulose et d'au moins un sucre différent du saccharose et/ou d'au moins un succédané du sucre et (b) au moins un aromatisant et/ou un agent de sapidité, l'isomaltulose et le ou les sucres différents du saccharose et/ou le ou les succédanés du sucre étant utilisés selon un rapport [isomaltulose : succédané du sucre] et/ou [isomaltulose : succédané du sucre] compris dans la plage de 10:1 à 3:1 ;
b) puis préparation d'un granulé et/ou d'un aggloméré à partir du mélange préparé dans l'étape a), par séchage avec ajustement d'une distribution granulométrique discrète, pour laquelle au moins 90 % des particules présentent une granulométrie de 0,1 à 10 mm, une résistance à la compression, calculée par la charge admissible par particule, d'au moins 0,01 N, et une humidité résiduelle totale de 0,3 à 8 % en poids, par rapport à la composition.

14. Composition pour boisson instantanée, en particulier selon l'une des revendications 1 à 12, en particulier pour la préparation d'une boisson instantanée de préférence non cariogène et/ou hypocalorique, par préparation avec un liquide buvable, en particulier l'eau, pouvant être obtenue par un procédé selon la revendication 13.

15. Utilisation d'une composition pour boisson instantanée selon l'une des revendications 1 à 12 pour préparer une boisson instantanée de préférence non cariogène et/ou hypocalorique, en particulier d'une boisson de thé instantané, non cariogène et/ou réductrice de calories.
